(19) Europäisches Patentamt / European Patent Office / Office européen des brevets

(11) **EP 4 089 576 B1**

(12) **EUROPEAN PATENT SPECIFICATION**

(45) Date of publication and mention
of the grant of the patent:
**19.06.2024   Bulletin 2024/25**

(21) Application number: **21912303.1**

(22) Date of filing: **02.04.2021**

(51) International Patent Classification (IPC):
**G06V 40/13** *(2022.01)*     **G02B 3/00** *(2006.01)*
**G02B 5/00** *(2006.01)*     G02B 30/32 *(2020.01)*

(52) Cooperative Patent Classification (CPC):
**G02B 3/0056; G02B 5/003; G06V 40/1318;**
G02B 30/32

(86) International application number:
**PCT/CN2021/085455**

(87) International publication number:
**WO 2022/205476 (06.10.2022 Gazette 2022/40)**

(54) **FINGERPRINT RECOGNITION APPARATUS AND ELECTRONIC DEVICE**

FINGERABDRUCKERKENNUNGSVORRICHTUNG UND ELEKTRONISCHE VORRICHTUNG

APPAREIL DE RECONNAISSANCE D'EMPREINTES DIGITALES ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.11.2022   Bulletin 2022/46**

(73) Proprietor: **HUI DING INTERNATIONAL PTE. LTD.
The Aries 117586 (SG)**

(72) Inventors:
• **TSAI, Fei Hsin
Zhongzheng Dist., Taipei City, Taiwan (CN)**
• **WANG, Yin
Zhongzheng Dist., Taipei City, Taiwan (CN)**

• **ZHANG, Sichao
Zhongzheng Dist., Taipei City, Taiwan (CN)**
• **LIN, Junxian
Zhongzheng Dist., Taipei City, Taiwan (CN)**

(74) Representative: **Pfenning, Meinig & Partner mbB
Patent- und Rechtsanwälte
Theresienhöhe 11a
80339 München (DE)**

(56) References cited:
**CN-A- 111 095 286     CN-A- 111 095 286
CN-A- 111 598 068     CN-A- 111 598 068
CN-A- 111 801 679     CN-A- 111 801 679
CN-A- 112 784 721     CN-U- 212 625 580
US-A1- 2017 140 221**

## Description

### TECHNICAL FIELD

Embodiments of the present application relate to the field of fingerprint identification, and more particularly, to a fingerprint identification apparatus and an electronic device.

### BACKGROUND

Due to increasing miniaturization of future handheld electronic products, a current under-screen optical fingerprint product of a lens type is difficult to adapt to this trend in size, and urgently needs to develop toward a thinner thickness, a smaller volume, and a higher level of integration. However, in the currently existing miniaturization solution, contrast of an image imaged by using a collimating hole is related to a depth of the collimating hole, a relatively greater depth is required to achieve higher imaging quality, and a light utilization rate of this solution is low at the same time. Limited by a process and a lens surface shape, a solution using micro lens focusing is high in a light utilization rate, but signals are easily aliased, which results in low signal contrast and low fingerprint imaging quality.

Therefore, how to improve fingerprint imaging quality while realizing lightness and thinness of an optical fingerprint identification apparatus is an urgent technical problem to be solved.

D1 (CN111598068A) discloses a fingerprint recognition device and electronic equipment, and aims to improve the fingerprint imaging quality while realizing lightening and thinning of the fingerprint recognition device. The fingerprint recognition device is suitable for the lower part of a display screen and comprises a plurality of fingerprint recognition units distributed in an array, and each fingerprint recognition unit comprises a micro lens; at least one light blocking layer, each light blocking layer is provided with a small light through hole, N small light through holes are formed in the bottom light blocking layer, and the maximum aperture D1 of each small light through hole and the maximum aperture CA of the micro lens meet the condition that D1/CA is larger than or equal to 0.02 and smaller than or equal to 0.4, so that N light guide channels in different directions are formed; the N pixel units are arranged below the at least one light blocking layer and are arranged at the bottoms of the N light guide channels in a one-to-one correspondence manner; after fingerprint optical signals returned from a finger above the display screen are converged through the micro lens, N target fingerprint optical signals in different directions are transmitted to N pixel units through N light guide channels respectively and used for fingerprint recognition.

D2 (CN111801679A) discloses a fingerprint detection device and an electronic device. The fingerprint detection device is arranged in an array or staggered with multiple fingerprint detection units. Each fingerprint detection unit includes: at least one micro lens. At least one light blocking layer under the at least one microlens and a plurality of optical sensing pixels under the at least one light blocking layer. The oblique optical signals in the 2M directions reflected from fingers above a display screen are condensed by the at least one microlens, and then transmitted to the plurality of optical fibersthrough the openings provided in the at least one light blocking layer. The oblique light signal is used to detect fingerprint information of the fingers. M is a positive integer. By receiving oblique light signals in 2M directions, not only can the fingerprint recognition effect of dry fingers be improved, but also the thickness of the optical fingerprint module can be reduced.

D3 (CN111095286A) discloses a fingerprint detecting device and electronic equipment. The fingerprint detecting device is suitable for locating below a display screen for realizing under-screen optical fingerprint detection. The fingerprint detecting device comprises the components of a micro lens array which is used for being arranged below the display screen; Z light blocking layers which are arranged below the micro lens array, wherein each of the light blocking layers is provided with a small hole array, and Z is a positive integer; an optical sensing pixel array which is arranged below the small hole array of the bottom light blocking layer in the Z light blocking layers; wherein the small hole array of each light blocking layer in the Z light blocking layers satisfies $0<=X_i/Z_d<=3$. Through restricting the structure parameter of the small hole in the small hole array, transmitting stacking of the optical signals returned from different positions of a finger can be prevented, namely the brightness of a fingerprint image is improved based on ensuring the contrast of the fingerprint image, thereby improving signal-to-noise ratio and resolution of the fingerprint image, and improving a fingerprint identification effect and identification accuracy.

### SUMMARY

The invention is set out in the appended set of claims.

### BRIEF DESCRIPTION OF THE DRAWINGS

FIGS. 1 and 2 are a schematic sectional view and a schematic top view of a fingerprint identification apparatus.

FIGS. 3 to 5 are a schematic sectional view, a schematic top view and a schematic perspective view of another fingerprint identification apparatus according to an embodiment not falling under the scope of the claims.

FIGS. 6 to 8 are a schematic sectional view, a schematic top view and a schematic perspective view of another fingerprint identification apparatus according to an embodiment not falling under the scope of the claims.

FIG. 9 is a schematic diagram of arrangement of a pixel array in a fingerprint identification apparatus according to an embodiment of the present application.

FIG. 10 is a schematic diagram of light passing holes in an intermediate light shielding layer corresponding to a plurality of pixel units of a fingerprint identification unit under ideal conditions.

FIG. 11 is a schematic sectional view of a fingerprint identification unit according to an embodiment of the present application.

FIG. 12 is a schematic sectional view of another fingerprint identification unit according to an embodiment not falling under the scope of the claims.

FIGS. 13 to 17 are schematic diagrams of a light passing region of an intermediate light shielding layer, wherein the embodiments of Fig. 13, 14, 16 and 17 do not fall under the scope of the claims, while the embodiment of Fig. 15 does fall under the scope of the claims.

FIG. 18 is a curve of contrast and brightness of an image captured by a fingerprint identification apparatus as a function of $D_2/CA$.

FIG. 19 is a schematic diagram of images captured under three $D_2/CA$ constraints.

FIG. 20 is a schematic sectional view of a fingerprint identification apparatus under different $D_2/CA$ constraints according to an embodiment of the present application.

FIG. 21 is a schematic sectional view of a fingerprint identification apparatus under different $D_2/D_1$ constraints according to an embodiment of the present application.

FIG. 22 shows a schematic sectional view of a fingerprint identification apparatus according to an embodiment of the present application.

FIG. 23 shows a schematic sectional view of another fingerprint identification apparatus according to an embodiment of the present application.

FIG. 24 shows a curve of contrast and brightness of an image captured by a fingerprint identification apparatus as a function of a shape of a light passing region of an intermediate light shielding layer.

FIG. 25 shows a schematic diagram of captured images according to four types of shapes of a light passing region of an intermediate light shielding layer.

FIG. 26 shows a schematic block diagram of an electronic device according to an embodiment of the present application.

## DESCRIPTION OF EMBODIMENTS

With the development of the times and the progress of science and technology, a screen-to-body ratio of a screen of an electronic product is getting higher and higher, and a full screen has become a development trend of many electronic products. In order to adapt to the development trend of such full screen, a photosensitive device in the electronic product, such as fingerprint identification and a front camera, is placed under the screen. Under-screen fingerprint identification technology is the most widely used under-screen optical fingerprint identification technology. Due to the particularity of an under-screen optical fingerprint device, light with a fingerprint signal is required to pass through a screen to be transmitted to a fingerprint sensor thereunder, so that a fingerprint signal is obtained.

It should be understood that an embodiment of the present application may be applied to an optical fingerprint system, including but not limited to an optical fingerprint identification system and a product based on optical fingerprint imaging. The embodiment of the present application is described only by an example of an optical fingerprint system, which should not constitute any limitation to the embodiment of the present application, and the embodiment of the present application is also applicable to another system using optical imaging technology or the like.

As a common application scenario, the optical fingerprint system provided in the embodiment of the present application may be applied to portable or mobile computing devices such as a smart phone, a tablet computer and a game device, and other electronic devices such as an electronic database, an automobile and an automated teller machine (ATM), which is not limited in the embodiment of the present application; and the embodiment of the present application may be applied to other mobile terminals having display screens or other electronic devices. More specifically, in the foregoing electronic device, a fingerprint identification apparatus may be specifically an optical fingerprint apparatus, which may be disposed in a partial region or an entire region under a display screen, thereby forming an under-display optical fingerprint system.

Generally, an under-screen fingerprint identification apparatus includes an optical component, and the optical component may be disposed above an optical fingerprint sensor, which may include a filter layer, a light path directing structure, and other optical elements.

There are two main solutions for a light path directing structure in a mass-produced under-screen fingerprint identification apparatus in the industry. One is to use a principle of through hole/small hole imaging. A small hole can direct a light signal reflected by a finger to a sensor chip under a display screen for fingerprint identification. In theory, the smaller an aperture of the small hole is, the higher resolution is. However, in actual industrial manufacturing, a size of the small hole cannot be further reduced, which limits improvement of its resolution. At the same time, since the small hole only allows a light signal in a vertical direction to enter, which results in that imaging signals are limited and enough light signals cannot be provided to a capturing region of the sensor chip. The other method is to perform imaging by using an optical lens, which uses a spherical or aspherical lens for converging light so as to improve imaging resolution. In addition, since the lens has the function of converging light, the lens imaging can direct more light signals to reach a sensor chip compared to the method of small hole imaging.

With the development of electronic devices towards ultra-thinness, most of the current fingerprint identification apparatuses adopt a structure of micro lens-small hole, that is, the fingerprint identification apparatus may include a micro lens array and a light shielding layer, the micro lens array may be disposed above the light shielding layer, and the light shielding layer is provided with an array of small holes. The micro lens array is configured to converge a light signal reflected by a finger to the array of small holes, and the array of small holes may direct a received light signal to a fingerprint sensor chip under the light shielding layer. The fingerprint sensor chip may perform fingerprint identification according to the received light signal.

The micro lens has the function of converging light, so as to be able to improve resolution of an image generated by the fingerprint sensor chip. The array of small holes has the function of screening light signals. For example, the array of small holes does not allow an interference light signal with a large angle to pass through, but only allows a light signal within a desired specific angle range to pass through, so as to improve a fingerprint identification effect.

It should be understood that in an embodiment of the present application, a sensing array in a fingerprint identification apparatus may also be referred to as a pixel array, and an optical sensing unit or a sensing unit in a sensing array may also be referred to as a pixel unit. In addition, an optical fingerprint sensor in the fingerprint identification apparatus may also be referred to as a fingerprint sensor or a fingerprint sensor chip.

It should also be understood that the fingerprint identification apparatus in the embodiment of the present application may also be referred to as an optical fingerprint apparatus, an optical fingerprint identification module, a fingerprint identification module, a fingerprint module, a fingerprint capturing apparatus, or the like, and the foregoing terms may be replaced with each other.

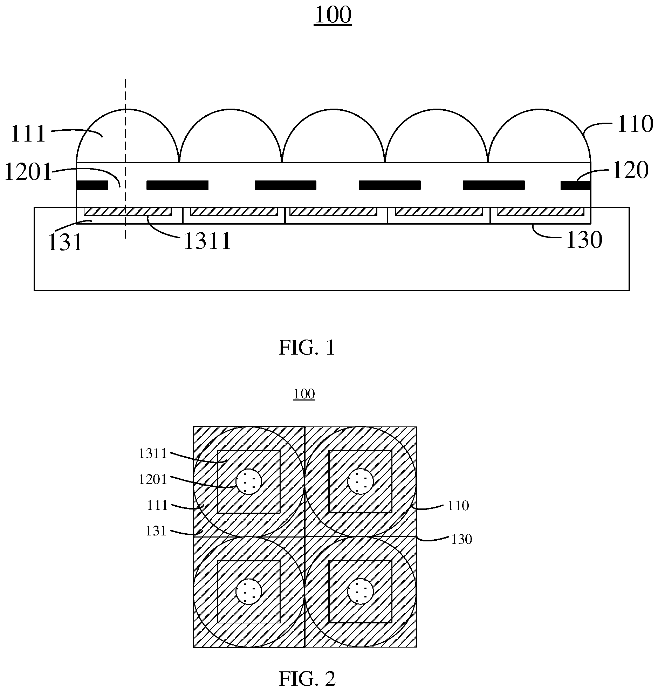

FIGS. 1 and 2 are a schematic sectional view and a schematic top view of a typical fingerprint identification apparatus.

As shown in FIGS. 1 and 2, a fingerprint identification apparatus 100 includes a micro lens array 110, at least one light shielding layer 120, and a pixel array 130. The micro lens array 110 is located directly above the pixel array 130 and the at least one light shielding layer 120, and one micro lens 111 corresponds to one pixel unit 131, that is, each micro lens 111 in the micro lens array 110 focuses received light to a pixel unit 131 corresponding to the same micro-lens 111 through a hole 1201 of the at least one light shielding layer 120. A light signal received by each micro lens 111 is mainly a fingerprint light signal incident perpendicular to the micro lens array 110 after being reflected or scattered by a finger above a display screen.

As shown in FIG. 2, pixel units 131 in the pixel array 130 are periodically arranged, and a photosensitive region 1311 of each pixel unit 131 in the pixel array 130 is disposed in a center position of the same pixel unit to improve a duty cycle of the photosensitive region.

In other words, a plurality of micro lenses 111 in the micro lens array 110 and a plurality of pixel units 131 in the pixel array 130 are in one-to-one correspondence, and photosensitive regions 1311 of the plurality of pixel units 131 in the pixel array 130 are periodically arranged and uniformly distributed.

However, the photosensitive regions of the pixel array 130 are affected by the size of the micro-lens array 110, and a thickness of the fingerprint identification apparatus 100 is relatively large, which further increases processing difficulty, period and costs of a light path of the fingerprint identification apparatus 100.

In the fingerprint identification apparatus 100, since a plurality of micro lenses are close to each other, light may be incident on a chip surface from other micro lenses, thus affecting an imaging effect. And since the micro lenses and the pixel units are in one-to-one correspondence, a theoretical maximum signal amount that one pixel unit can receive is energy of collimated light received when the micro lens occupies an area of one pixel unit. This receiving method limits the further improvement of the image signal amount. Under weak illumination, a signal-to-noise ratio is lower, which affects image quality.

In addition, in a normal life scene, for example, in a scene such as after washing hands, getting up in the morning, wiping dust with a finger, or at a low temperature, a finger is usually dry, stratum corneum is uneven, and when the finger is pressed against a display screen, poor contact may occur in some regions of the finger. When contact between the dry finger and the display screen is bad, contrast between a fingerprint ridge and a fingerprint valley of a fingerprint image in a vertical direction that is formed by the above fingerprint identification apparatus 100 is poor, and the image is so blurred that fingerprint lines cannot be distinguished. Therefore, the above fingerprint identification apparatus 100 presents poor fingerprint identification performance for a dry finger.

Based on the above problems, the present application provides a fingerprint identification apparatus 200. One or more light shielding layers provided with an array of small holes is adopted to be combined with a micro lens array, and each micro lens corresponds to a plurality of pixel units. Each pixel unit of the plurality of pixel units may receive oblique collimated light converged by the entire micro lens, but incident light received by the plurality of pixel units corresponding to one micro lens has different oblique directions. Finally, multiple images can be taken from an image chip array, and each image is made up of pixel units received in the same oblique direction. This receiving method can greatly improve contrast and brightness of the image, and can also achieve other applications such as expanding a size of an object-side field of view.

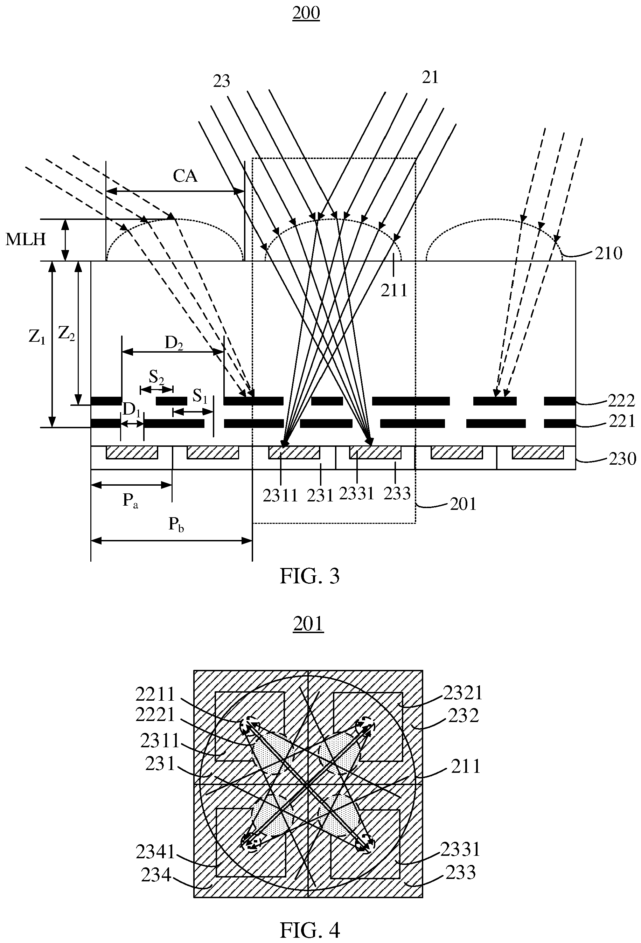

FIGS. 3 to 5 show a schematic sectional view, a schematic top view and a schematic perspective view of a fingerprint identification apparatus 200, which does not fall under the scope of the claims.

As shown in FIGS. 3 to 5, the fingerprint identification apparatus 200 is applied under a display screen to implement under-screen optical fingerprint identification, and the fingerprint identification apparatus 200 includes a plurality of fingerprint identification units 201 distributed in a square array. As shown in FIGS. 3 to 5, in the fingerprint identification apparatus 200, each fingerprint identification unit 201 includes:

a plurality of pixel units;
a micro lens 211 disposed above the plurality of pixel pixels; and
at least one light shielding layer disposed between the plurality of pixel units and the micro lens 211, where each of the at least one light shielding layer is provided with light passing holes corresponding to the plurality of pixel units so as to from a plurality of light directing channels in one-to-one correspondence with the plurality of pixel units; where the plurality of pixel units are respectively configured to receive a plurality of fingerprint light signals reflected or scattered from a finger above the display screen, converged by the micro lens 211, and transmitted through the plurality of light directing channels, and the plurality of fingerprint light signals are used to detect fingerprint information of the finger for fingerprint identification.

In specific implementation, a transmittance of each of the at least one light shielding layer to light of a specific wavelength band (such as visible light or light of a wavelength band above 610 nm) is less than a preset threshold (such as 20%) to avoid the corresponding light to pass through.

It should be understood that a micro lens included in each fingerprint identification unit 201 of a plurality of fingerprint identification units in a fingerprint identification apparatus forms a micro lens array 210. A plurality of pixel unit included in each fingerprint identification unit 201 of the plurality of fingerprint identification units in the fingerprint identification apparatus form a pixel array 230. A light shielding layer in each fingerprint identification unit 201 is actually a local light shielding layer.

For the convenience of description, the fingerprint identification apparatus in the embodiment of the present application will be introduced below with a fingerprint identification unit 201 as a unit, and the local light shielding layer in the fingerprint identification unit 201 is referred to as a light shielding layer for short.

In some embodiments, the fingerprint identification unit 201 includes a plurality of light shielding layers, that is, a bottom light shielding layer 221 and an intermediate light shielding layer 222, where the bottom light shielding layer 221 is a light shielding layer closest to the pixel unit, and the intermediate light shielding layer 222 is a light shielding layer other than the bottom light shielding layer.

In some embodiments, in the fingerprint identification unit 201, one micro lens corresponds to four pixel units.

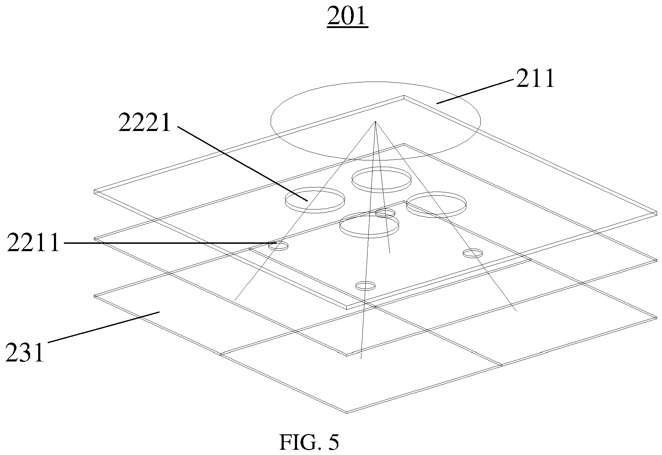

For example, as shown in FIGS. 3 to 5, the fingerprint identification unit 201 in FIG. 3 is actually a sectional view of a fingerprint identification unit 201 in FIG. 5 along a line connecting a center of a first pixel unit 231 and a center of a third pixel unit 233, and FIG. 4 is a top view of FIG. 5. In the fingerprint identification unit 201, a first pixel unit 231, a second pixel unit 232, a third pixel unit 233 and a fourth pixel unit 234 are correspondingly disposed below a first micro lens 211, and the four pixel units are respectively located at bottoms of light directing channels in four different directions.

Specifically, each pixel unit is provided with a photosensitive region (or Active Area, AA) for respectively receiving four fingerprint light signals passing through the four light directing channels and converting the fingerprint light signals into corresponding electrical signals. The photosensitive region may be a region where a photodiode in the pixel unit is located, that is, a region in the pixel unit that receives a light signal, and other regions in the pixel unit may be used for setting other circuits in the pixel unit and for arrangement of wiring between pixels. Specifically, a first photosensitive region 2311 in the first pixel unit 231, a second photosensitive region 2321 in the second pixel unit 232, a third photosensitive region 2331 in the third pixel unit 233, and a fourth photosensitive region 2341 in the fourth pixel unit 234 are all disposed at the bottoms of the above light directing channels in four different directions.

Optionally, in some embodiments, for example, as shown in FIGS. 3 to 5, the four light directing channels corresponding to the first micro lens 211 are all provided with four light passing holes on both the bottom light shielding layer 221 and the intermediate light shielding layer 222, and the four light passing holes on each light shielding layer correspond to four pixel units. That is, the light passing holes of the four light guiding channels in the bottom light shielding layer 221 and the intermediate light shielding layer 222 respectively are independent of each other. For example, in FIG. 4, the bottom light shielding layer 221 is provided with a light passing hole 2211 corresponding to the first pixel unit 231, the intermediate light shielding layer 222 is provided with a light passing hole 2221 corresponding to the first pixel unit 231, and the light passing hole 2211 and the light passing hole 2221 are both light passing holes on the first light directing channel that is corresponding to the first pixel unit 231. In other words, the light passing hole 2211 and the light passing hole 2221 form a first light directing channel corresponding to the first pixel unit 231. Optionally, a center of the light passing hole 2211 and a center of the light passing hole 2221 may be on a straight line, and a direction of the straight line is a direction of the first light directing channel. After converged by the first micro lens 211, an oblique light signal 21 in a first direction passes through the first light directing channel to the first photosensitive region 2311 in the first pixel unit 231, while a light signal in another direction (for example, a light signal shown by a dotted line in the figure) is shielded in the light shielding layer and cannot be transmitted to the pixel unit.

The above oblique light signal 21 in the first direction may be an oblique fingerprint light signal in the first direction that passes through the display screen and reaches the first micro lens 211 after being reflected or scattered by a finger above the display screen. The oblique light signal 21 in the first direction may be used to detect fingerprint information.

Similarly, for setting of a light passing hole corresponding to another pixel unit below the first micro lens 211, reference may be made to the above setting of the light passing hole corresponding to the first pixel unit. The other pixel unit may also receive an oblique fingerprint light signal in another direction, and the oblique fingerprint light signal in another direction passes through a light directing channel formed by light passing holes, and is transmitted to the corresponding pixel unit after converged by the first micro lens 211. For example, in FIG. 3, after converged by the first micro lens 211, an oblique light signal 23 in a third direction reaches the third photosensitive region 2331 in the third pixel unit 233 through a third light directing channel.

In some other embodiments, four light directing channels corresponding to each micro lens are provided with four light passing holes in the bottom light shielding layer 221, the four light passing holes correspond to four pixel units, and light passing holes of the four light directing channels on the intermediate light shielding layer 222 overlap, that is, only one light passing hole is provided in the intermediate light shielding layer 222.

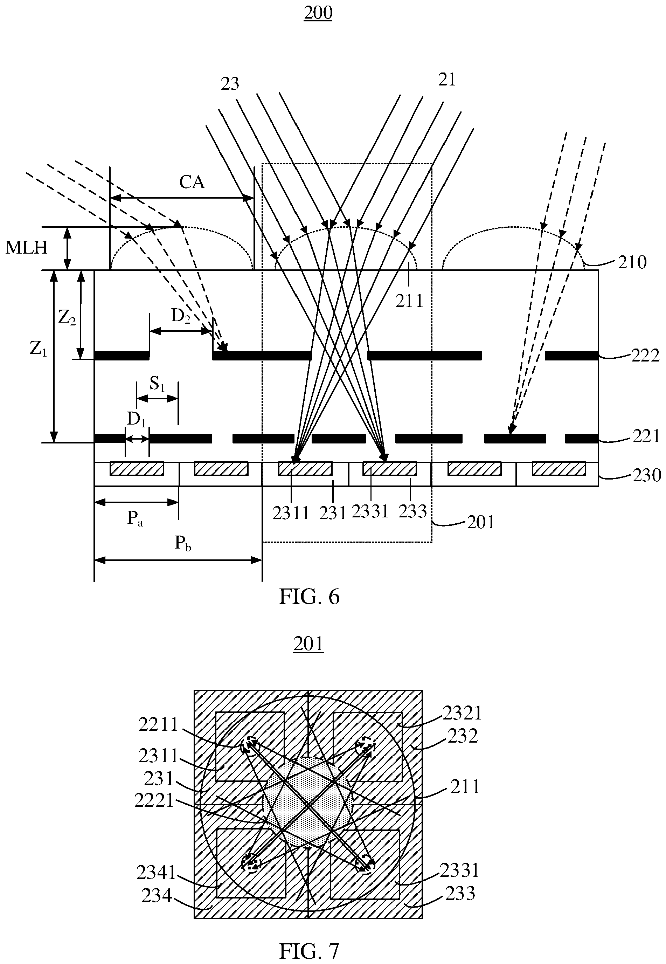

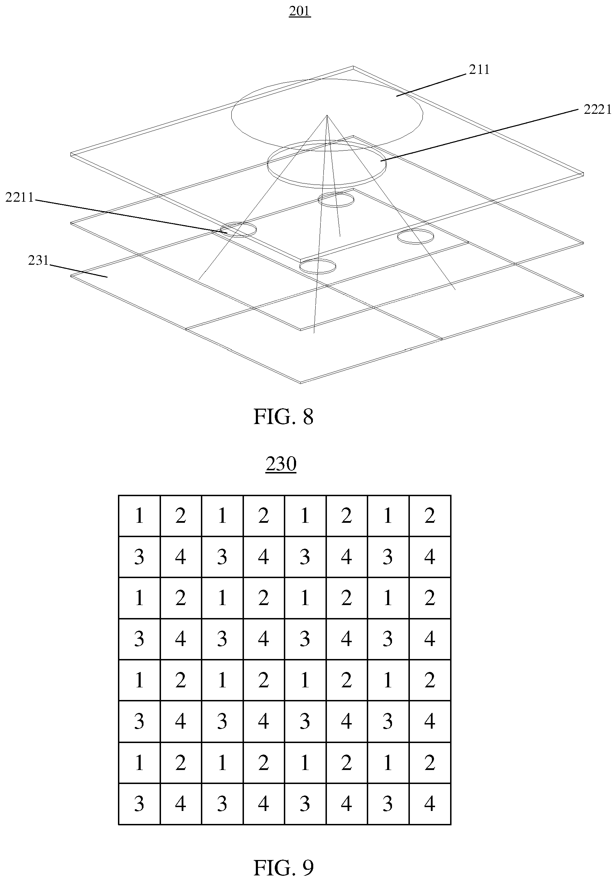

FIGS. 6 to 8 show a schematic sectional view, a schematic top view and a schematic perspective view of another fingerprint identification apparatus, which does not fall under the scope of the claims. A fingerprint identification unit 201 in FIG. 6 is actually a sectional view of a fingerprint identification unit 201 in FIG. 8 along a line connecting a center of a first pixel unit 231 and a center of a third pixel unit 233, and FIG. 7 is a top view of FIG. 8.

In FIGS. 6 to 8, a bottom light shielding layer 221 is provided with a light passing hole 2211 corresponding to a first pixel unit 231, an intermediate light shielding layer 222 is provided with one large light passing hole 2221, and the light passing hole 2221 corresponds to four pixel units. The light passing hole 2211 and the light passing hole 2221 form a first light directing channel corresponding to the first pixel unit 231. Optionally, a center of the light passing hole 2211 and a center of the light passing hole 2221 may be on a straight line, and a direction of the straight line is a direction of the first light directing channel. After converged by the first micro lens 211, an oblique light signal 21 in a first direction passes through the first light directing channel to a first photosensitive region 2311 in the first pixel unit 231, while a light signal in another direction (for example, a light signal shown by a dotted line in the figure) is shielded in the light shielding layer and cannot be transmitted to the pixel unit.

Similarly, for setting of a light passing hole corresponding to another pixel unit, reference may be made to the above setting of the light passing hole corresponding to the first pixel unit, and details will not be repeated here again.

In the above embodiment of the application, four pixel units corresponding to each micro lens in a fingerprint identification apparatus 200 receive oblique light signals in four different directions through light directing channels in four different directions. Therefore, a pixel array 230 in the fingerprint identification apparatus 200 may generate four fingerprint images based on the received light signals in four different directions, and then a fingerprint image with high resolution is obtained so as to improve a fingerprint identification effect.

FIG. 9 shows a schematic diagram of arrangement of a pixel array 230. As shown in FIG. 9, "1" represents a pixel unit for receiving an oblique light signal in a first direction, "2" represents a pixel unit for receiving an oblique light signal in a second direction, "3 represents a pixel unit for receiving an oblique light signal in a third direction, and "4" represents a pixel unit for receiving an oblique light signal in a fourth direction. That is, in the pixel array 230, all the pixel units represented by "1" may be used to generate a first fingerprint image respectively, and all the pixel units represented by "2" may be used to generate a second fingerprint image respectively, all the pixel units represented by "3" may be used to generate a third fingerprint image respectively, and all the pixel units represented by "4" may be used to generate a fourth fingerprint image respectively, that is, a total of four fingerprint images may be generated. The four fingerprint images may be used for fingerprint identification independently, or may also be combined into a fingerprint image of high resolution, so as to improve an identification effect of a fingerprint identification apparatus.

Further, since the four fingerprint images are generated by oblique light signals in different directions, the four fingerprint images correspond to different object-side imaging regions, and other applications such as expanding a size of an object-side field of view can also be realized.

In the solution of the embodiment, by means of a light path design, four pixel units corresponding to a single micro lens can receive light signals in four directions simultaneously, which increases an amount of light admitted to a fingerprint identification apparatus, reduces exposure time and increases a field of view. At the same time, through an imaging light path of a single micro lens coordinated with a plurality of pixel units, non-frontal light imaging (that is, oblique light imaging) can be performed on an object-side beam of a fingerprint, which can improve an identification effect of a dry finger, and expand an object-side numerical aperture of an optical system and shorten a design thickness of a light path of a pixel array, and finally effectively reduce a thickness of the fingerprint identification apparatus.

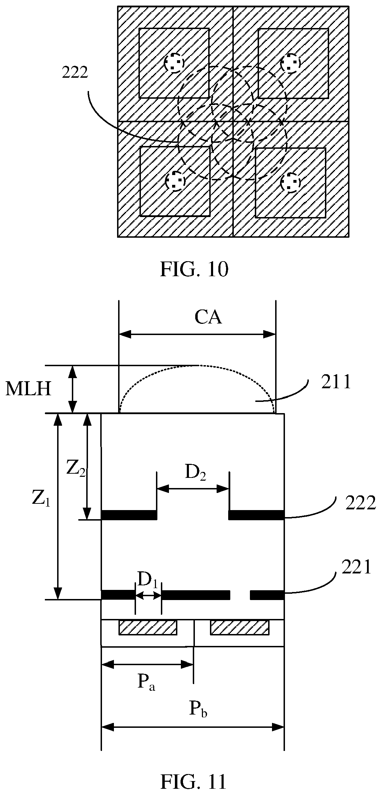

Under ideal conditions, as shown in FIG. 10, four light passing holes (aperture holes) of an intermediate light shielding layer that are corresponding to four pixel units overlap with each other (shown by a dotted line in the figure). For the intermediate light shielding layer, increase in an area of the light passing hole will lead to admission of stray light and decrease of collimation. However, limited by process technology, lower-cost technology cannot obtain higher graphics precision. Therefore, an embodiment of the present application provides several technical solutions, which can obtain higher aperture shape precision of an intermediate light shielding layer and better image quality under relatively economical conditions.

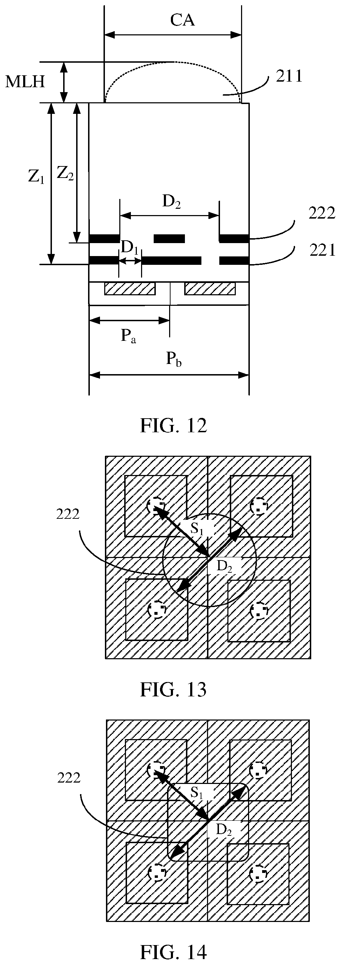

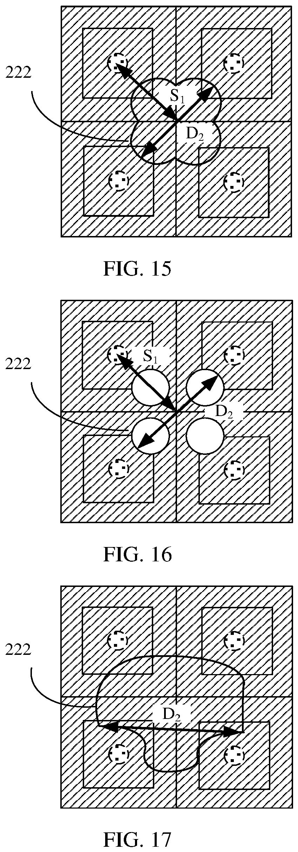

FIGS. 11 and 12 show schematic sectional views of two fingerprint identification units 201 respectively, FIGS. 13 to 15 are schematic top views of FIG. 11, and FIG. 16 which does not fall under the scope of the claims, is a schematic top view of FIG. 12.

In FIG. 13, which does not fall under the scope of the claims, light passing holes of four light directing channels in an intermediate light shielding layer 222 overlap, and are one large circular through hole.

An advantage of the large circular through hole is that manufacturing precision requirements are lower. Optionally, a hole of the intermediate light shielding layer may be made by a method such as lithography or coating. Since a circle is a simple pattern, a complete pattern can be obtained with lower lithography resolution regardless of whether it is exposed with a positive adhesive or a negative adhesive.

In FIG. 14, which does not fall under the scope of the claims, light passing holes of four light directing channels in an intermediate light shielding layer 222 overlap, and are a rounded rectangular through hole.

Compared with the large circular through hole, the rounded rectangular through hole can further reduce a stray light leakage region without substantially increasing difficulty in a process, and can be achieved no matter a positive adhesive, a negative adhesive or coating is adopted.

In FIG. 15, depicting an embodiment, which falls under the scope of the claims, light passing holes of four light directing channels in an intermediate light shielding layer 222 overlap, and are a petaloid through hole. The number of petals is four, and the petaloid through hole is composed of four overlapping holes, or four holes having intersection. The shape of the petal is formed by four holes overlapping with each other and is exactly like a petal. The shape of the hole may be a circle, an ellipse or other shapes. Optionally, if a fingerprint identification unit includes nine pixel units, that is, nine light directing channels, the number of petals is nine, and the petaloid through hole is composed of nine overlapping light passing holes. In other words, the number of petals may be related to the number of pixel units included in a fingerprint identification unit. FIG. 15 shows petaloid light passing holes formed by four circular holes partially overlapping/intersecting with each other.

Compared with the rounded rectangular through hole and the large circular through hole, the petaloid through hole has an advantage of further reducing unnecessary light leakage region, promoting collimation of incident light to the largest extent, and increasing image contrast, but higher lithography resolution is required, and costs will be increased if manufacturing is implemented by means of coating.

In FIG. 16, which does not fall under the scope of the claims, light passing holes of four light directing channels in the intermediate light shielding layer 222 are independent of each other.

Under this structure, respective small holes of the intermediate light shielding layer are not interlaced, which plays a prominent role on improving the collimation of incident light and improving crosstalk of strong light, but high processing resolution requirements and high material requirements are required, and it is possible for thin walls between the respective small holes to break.

For ease of description, in an embodiment of the present application, $D_2$ may be defined as a light passing aperture of a light passing region formed by light passing holes in the intermediate light shielding layer 222 that are corresponding to the four pixel units, and the light passing aperture $D_2$ may be a distance between two farthest points in the light passing region on a plane where the intermediate light shielding layer is located. For example, $D_2$ may be a diameter of the circle on the intermediate light shielding layer 222 as shown in FIG. 13, a diagonal of the rounded rectangle on the intermediate light shielding layer 222 as shown in FIG. 14, a largest size through a center of the petal on the intermediate light shielding layer 222 as shown in FIG. 15, or the farthest distance between two diagonal holes on the intermediate light shielding layer 222 as shown in FIG. 16.

In addition, CA may further be defined as a maximum aperture of the micro lens 211, for example, CA may be a maximum width of the micro lens 211 in the maximum cross section in a horizontal direction.

Optionally, the micro lens 211 may be a spherical lens or an aspherical lens, of which an upper surface is spherical or aspherical, and a lower surface is a horizontal plane, and the maximum aperture CA of the micro lens 211 may be a maximum width of the lower surface.

For example, in FIGS. 11 and 12, the micro lens 211 may be a spherical lens, of which a lower surface is a circular horizontal plane, and the maximum aperture CA of the micro lens 211 is a diameter of the circular horizontal plane.

It should be understood that although embodiments of the present application only show four shapes of holes of the intermediate light shielding layer 222, the embodiments of the present application should not be limited thereto, and a shape of the light passing region of the intermediate light shielding layer 222 may also be a special shape as shown in FIG. 17, which does not fall under the scope of the claims, that is, an irregular shape, and $D_2$ is defined as shown in the figure.

In an embodiment of the present application, a light passing aperture $D_2$ of the light passing region and a maximum aperture CA of the micro lens 211 satisfy $0.3 \leq D_2/CA \leq 1.3$. It can be understood that when the fingerprint identification apparatus includes a plurality of intermediate light shielding layers, any intermediate light shielding layer may satisfy the value range of $D_2/CA$, as well as other parameter ranges related to the intermediate light shielding layer. It may also be that the plurality of intermediate light shielding layers all meet the related parameter ranges.

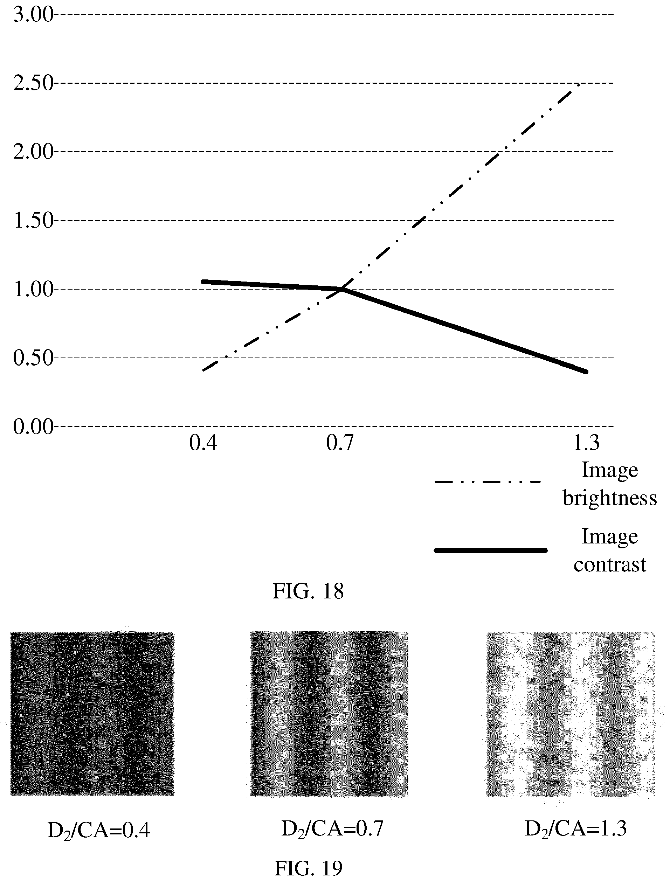

FIG. 18 shows a curve graph of contrast and brightness of an image as a function of $D_2/CA$. FIG. 19 shows a schematic diagram of images captured under three $D_2/CA$ constraints. It can be understood that image contrast characterizes a difference in the degree of brightness or darkness of an image, and may also be understood as a contrast ratio of an image.

As shown in FIG. 18, as the $D_2/CA$ increases, the image contrast decreases, but the image brightness increases. Further from FIG. 19, it can be seen that when $D_2/CA \approx 0.7$, the image contrast and the image brightness coincide and are both high, an image imaging effect is the best. When $D_2/CA$ is larger or smaller, an image is too bright or too dark, a contrast ratio of the image is poor, and an image imaging effect is poor.

Based on technical solutions of embodiments of the present application, on the basis of considering manufacturing processes and costs, parameters in a fingerprint identification apparatus are constrained to meet certain conditions, so as to meet requirements of image brightness and contrast. Specifically, a light passing aperture $D_2$ of a light passing region in an intermediate light shielding layer and a maximum aperture CA of a micro lens may be constrained to satisfy $0.3 \leq D_2/CA \leq 1.3$. If $D_2/CA$ is too small, an amount of light admitted to the light passing region in the intermediate light shielding layer is less, which may cause an image to become darker and noise to increase; and if $D_2/CA$ is too large, it may cause stray light to enter, thereby affecting image sharpness. If $D_2/CA$ is within a range constrained by the present application, image aliasing can be effectively reduced during imaging, the imaging has higher contrast and higher brightness, and ultimately a better imaging effect for various objects can be achieved, and identification accuracy is improved.

In an embodiment of the present application, $Z_i$ may be defined as a depth between a lower surface of an i-th light shielding layer and a lower surface of the micro lens 211 from bottom to top. For example, in FIGS. 11 and 12, $Z_1$ is defined as a depth between a lower surface of the bottom light shielding layer 221 and the lower surface of the micro lens 211, and $Z_2$ is defined as a depth between a lower surface of the intermediate light shielding layer 222 and the lower surface of the micro lens 211.

Optionally, the depth $Z_2$ between the lower surface of the intermediate light shielding layer 222 and the lower surface of the micro lens 211 and the depth $Z_1$ between the lower surface of the bottom light shielding layer 221 and the lower surface of the micro lens 211 may also be constrained to satisfy $0.1 \leq Z_2/Z_1 \leq 0.9$.

No matter $Z_2/Z_1$ is too large or too small, more stray light will be caused to enter, and by constraining $0.1 \leq Z_2/Z_1 \leq 0.9$, stray light crosstalk can be effectively reduced.

On the basis of constraining $0.3 \leq D_2/CA \leq 1.3$, $0.1 \leq Z_2/Z_1 \leq 0.9$ is further constrained, that is, the intermediate light shielding layer is constrained from the size of the light passing region of the intermediate light shielding layer and the position of the intermediate light shielding layer between the bottom light shielding layer and the micro lens, which can effectively reduce stray light crosstalk, increase collimation of incident light, improve image contrast, and thus improve identification accuracy.

Further, by constraining the parameter range of the intermediate light shielding layer, and combined with the shape of the hole of the intermediate light shielding layer, a better balance between economy and image quality can be obtained.

For example, when $0.1 \leq Z_2/Z_1 \leq 0.5$, since the intermediate light shielding layer 222 is relatively close to the micro lens 211, an offset of the light passing hole in the intermediate light shielding layer 222 required by each pixel unit relative to the micro lens 211 is relatively smaller in an ideal situation. In this case, $0.5 \leq D_2/CA \leq 1$ may be further constrained, so that a large circular through hole with lower process difficulty can be adopted for implementation, which better limits incidence of stray light, and thus ensures image brightness and contrast under relatively economical conditions.

For another example, when $0.3 \leq Z_2/Z_1 \leq 0.75$, since the distance between the intermediate light shielding layer 222 and the micro lens 211 becomes farther, an offset of the light passing hole in the intermediate light shielding layer 222 required by each pixel unit relative to the micro lens 211 gradually increases in an ideal situation. In this case, $0.5 \leq D_2/CA \leq 0.8$ may be further constrained, so that a rounded rectangular through hole or a petaloid through hole with moderate process difficulty can be adopted for implementation, which can reduce incidence of stray light as much as possible on the premise of not reducing the light passing hole, and obtain better image brightness and contrast.

For another example, when $0.65 \leq Z_2/Z_1 \leq 0.9$, since the distance between the intermediate light shielding layer 222 and the micro lens 211 is relatively far, an offset of the light passing hole in the intermediate light shielding layer 222 required by each pixel unit relative to the micro lens 211 is larger in an ideal situation. In this case, $0.8 \leq D_2/CA \leq 1.2$ may be further constrained, so that four independent holes can be adopted to better reduce incidence of stray light, so as to obtain better image brightness and contrast. However, due to restriction of process difficulty, a single rounded rectangular through hole and a petaloid through hole may also be adopted in this case.

It can be understood that in the above text, a structure and a fingerprint imaging principle of a fingerprint identification apparatus are described by an example that one micro lens corresponds to four pixel units in a fingerprint identification unit 201. Optionally, in the fingerprint identification unit 201, one micro lens may also correspond to two, three, or four or more pixel units, for example, nine, sixteen pixel units, etc. The embodiment of the present application does not limit the number of pixel units in the fingerprint identification unit.

Optionally, on the basis of considering process and cost factors, in an embodiment of the present application, the number of pixel units in each fingerprint identification unit 201 may be $A \times A$, where $1 < A \leq 4$, and A is a positive integer, preferably, A=2 or 3.

In some embodiments, A=3, that is, each fingerprint identification unit includes nine pixel units, that is, one micro lens corresponds to the nine pixel units, and the bottom light shielding layer may also include nine light passing holes, where one light passing hole of the bottom light shielding layer corresponds to one pixel unit. Optionally, the intermediate light shielding layer only includes one light passing hole, that is, one micro lens corresponds to one light passing hole of the intermediate light shielding layer, and one light passing hole of the intermediate light shielding layer corresponds to the nine light passing holes of the bottom light shielding layer, and the nine light passing holes of the bottom light shielding layer are in one-to-one correspondence with the nine pixel units. Optionally, the intermediate light shielding layer includes nine light passing holes, that is, one micro lens corresponds to the nine light passing holes of the intermediate light shielding layer, and the nine light passing holes of the intermediate light shielding layer are in one-to-one correspondence with the nine light passing holes of the bottom light shielding layer, and the nine light passing holes of the bottom light shielding layer are in one-to-one correspondence with the nine pixel units.

In some embodiments, A=4, that is, each fingerprint identification unit includes sixteen pixel units, that is, one micro lens corresponds to the sixteen pixel units, and the bottom light shielding layer may also include sixteen light passing holes, where one light passing hole of the bottom light shielding layer corresponds to one pixel unit. Optionally, the intermediate light shielding layer only includes one light passing hole, that is, one micro lens corresponds to one light passing hole of the intermediate light shielding layer, and one light passing hole of the intermediate light shielding layer corresponds to the sixteen light passing holes of the bottom light shielding layer, and the sixteen light passing holes of the bottom light shielding layer are in one-to-one correspondence with the sixteen pixel units. Optionally, the intermediate light shielding layer includes sixteen light passing holes, that is, one micro lens corresponds to the sixteen light passing holes of the intermediate light shielding layer, and the sixteen light passing holes of the intermediate light shielding layer are in one-to-one correspondence with the sixteen light passing holes of the bottom light shielding layer, and the sixteen light passing holes of the bottom light shielding layer are in one-to-one correspondence with the sixteen pixel units.

When only one light passing hole is included in the intermediate light shielding layer, a shape of the light passing hole may be a circle, a rounded rectangle or a petal. For details, reference may be made to the foregoing related content, and details will not be repeated here again.

Optionally, in an embodiment of the present application, $A = P_b/P_a$, where $P_b$ is defined as an arrangement period of a plurality of micro lenses in the fingerprint identification apparatus, and $P_a$ is defined as an arrangement period of the plurality of pixel units in the fingerprint identification apparatus.

For example, after the plurality of fingerprint identification units 201 are arranged in an array, the plurality of micro lenses form a micro lens array, and the plurality of pixel units form a pixel array, and on a horizontal plane, an arrangement period of the plurality of micro lenses in both an X direction and a Y direction is $P_b$, and an arrangement period of the plurality of pixel units in both the X direction and the Y direction is $P_a$. In the present application, the horizontal plane is parallel to a plane where the display screen is located, and a vertical plane is perpendicular to the plane where the display screen is located.

On the basis of comprehensively considering an image space sampling rate and process costs , in some

embodiments, 5 $\mu m \leq P_b \leq 40$ $\mu m$, preferably, 10 $\mu m \leq P_b \leq 30$ $\mu m$.

In an embodiment of the present application, $D_1$ is defined as a maximum aperture of each light passing hole in the bottom light shielding layer.

For example, if the plurality of light passing holes in the bottom light shielding layer are circular holes, $D_1$ represents a diameter of a light passing hole.

For another example, if the plurality of light passing holes in the bottom light shielding layer are rounded rectangular holes or rectangular holes, $D_1$ represents a distance between opposite corners of a light passing hole.

Optionally, shapes of the plurality of light passing holes in the bottom light shielding layer may be the same or different. For example, the shapes of the plurality of light passing holes in the bottom light shielding layer are the same, that is, the plurality of light passing holes may all be circular holes, rounded rectangular holes or rectangular holes. For another example, the shapes of the plurality of light passing holes in the bottom light shielding layer are different, that is, the plurality of light passing holes may include at least two of circular holes, rounded rectangular holes and rectangular holes. Optionally, when the micro lens 211 in the fingerprint identification unit 201 corresponds to four pixel units, the micro lens 211 corresponds to four light passing holes of the bottom light shielding layer 221, and the four light passing holes may include three circular light passing holes and one rectangular hole, or four light passing holes may include three circular light passing holes and one rounded rectangular hole, or four light passing holes may include two circular light passing holes, one rectangular hole and one rounded rectangular hole, etc. The shapes of the four light passing holes may be combined arbitrarily, but by considering process complexity and process steps, the shapes of the light passing holes preferably remain the same.

Optionally, sizes of the plurality of light passing holes in the bottom light shielding layer may be the same or different. For example, at least two of the plurality of light passing holes have different apertures. For another example, each of the plurality of light passing holes has the same aperture.

Preferably, the plurality of light passing holes in the bottom light shielding layer are circular holes of the same aperture.

In an embodiment of the present application, the light passing holes in the bottom light shielding layer are circular light passing holes, rounded rectangular holes or rectangular holes, which have good symmetry and have symmetrical light passing performance for light signals in various directions, so as to be able to improve balance of an image in various directions, and improve image quality.

Optionally, in an embodiment of the present application, a maximum aperture $D_1$ of each light passing hole in the bottom light shielding layer 221 and a maximum aperture CA of the micro lens may be constrained to satisfy $0.02 \leq D_1/CA \leq 0.4$.

By constraining the maximum diameter $D_1$ of each light passing hole in the bottom light shielding layer and the maximum diameter CA of the micro lens to satisfy $0.02 \leq D_1/CA \leq 0.4$, a proportion of a light-receiving area of the micro lens to a size of the light passing hole is comprehensively considered. When the proportion is less than or equal to 0.4, each light passing hole in the bottom light shielding layer under the current micro lens can well shield stray light transmitted by an adjacent micro lens and reduce image aliasing, thereby improving a contrast ratio of imaging or contrast of an image. When the proportion is greater than or equal to 0.02, it is ensured that sufficient light signals can pass through each light passing hole in the bottom light shielding layer so as to ensure imaging brightness. Therefore, by adopting the solution of the embodiment of the present application, both image brightness and image contrast can be taken into account, thereby improving image quality and identification success rate.

Generally speaking, if brightness and contrast of the image need to be improved, the number of pixel units corresponding to the micro lens in one fingerprint identification unit can be increased, so that a light signal converged by the micro lens can be more fully utilized, and a space sampling rate of the image can be improved, thereby improving the brightness and contrast of the image, but this method will cause increase in difficulty of a manufacturing process and increase in costs. Therefore, in the technical solution of the embodiment of the present application, on the basis of considering manufacturing processes and costs, parameters in the fingerprint identification apparatus are constrained to meet certain conditions, so that requirements of image brightness and contrast are met.

In some embodiments, $0.08 \leq D_1/CA \leq 0.18$. Preferably, $0.12 \leq D_1/CA \leq 0.14$, for example, $D_1/CA = 0.12$, 0.13 or 0.14, or $D_1/CA$ may also be any value between 0.12 and 0.14, which is not specifically limited in the embodiment of the present application.

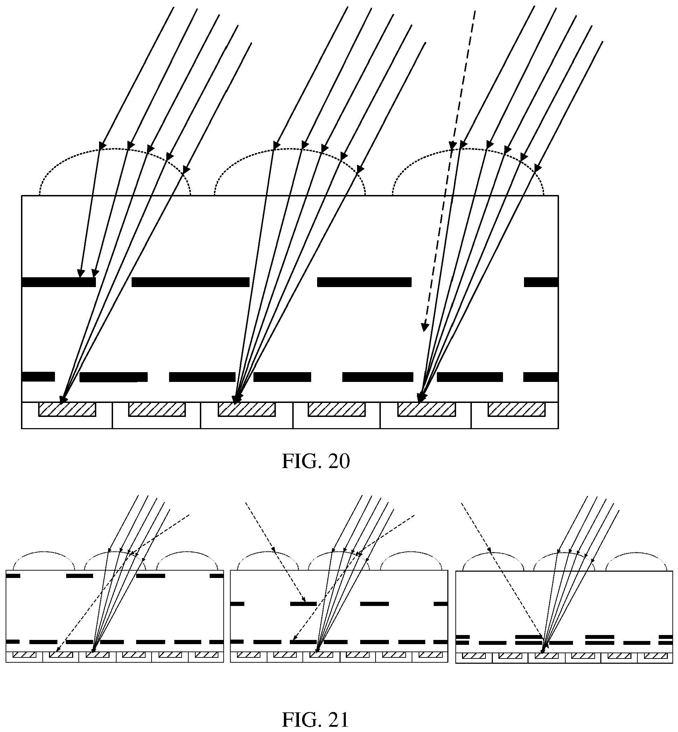

Specifically, on the basis of satisfying $0.08 \leq D_1/CA \leq 0.18$, if $0.5 \leq D_2/CA \leq 1.2$ is satisfied, brightness and sharpness of the image will reach a certain balance. As shown in FIG. 20, if $D_2/CA$ is too small, an amount of admitted light will decrease, and an image will become darker and noise will increase; and if $D_2/CA$ is too large, stray light (indicated by a dotted line) will enter, thus affecting image sharpness.

In some embodiments, a radius of curvature ROC of the micro lens 211 and the depth distance $Z_1$ between the lower surface of the bottom light shielding layer 221 and the lower surface of the micro lens 211 satisfy $0.25 \leq ROC/Z_1 \leq 0.75$.

After converged by the micro lens, target fingerprint light signals in each direction among target fingerprint light signals in multiple directions are all focused on respective light passing holes in the bottom light shielding layer, an imaging effect is optimal in this case, and image contrast is improved while image brightness is taken into account. Therefore, in the technical solution of the embodiment of the present application, by constraining a radius of curvature ROC of the micro lens and a depth distance $Z_1$ between a lower surface of the bottom light shielding layer and a lower surface of the micro lens to satisfy $0.25 \leq ROC/Z_1 \leq 0.75$, and comprehensively considering a proportion of a focal point of the micro lens to a position of the bottom light shielding layer, each light passing hole in the bottom light shielding layer meets or is close to the above condition, so as to improve image quality and identification success rate.

Optionally, if the micro lens is a spherical lens, as shown in FIGs. 11 and 12, the radius of curvature ROC of the micro lens may be calculated in the following formula:

$$ROC = \frac{CA^2}{8 \times MLH} + \frac{1}{2} \times MLH,$$

where MLH is a height of the micro lens, that is, a height from a vertex of the micro lens to a lower surface thereof, and CA is the maximum aperture of the micro lens.

Of course, a radius of curvature of an aspheric lens also has its calculation method. For the specific calculation method, reference may be made to a calculation method in the related art, which will not be discussed in detail here.

In some embodiments, $0.4 \leq ROC/Z_1 \leq 0.6$. Preferably, $0.47 \leq ROC/Z_1 \leq 0.49$, for example, $ROC/Z_1 = 0.47$, 0.48 or 0.49, or $ROC/Z_1$ may also be any value between 0.47 and 0.49, which is not specifically limited in the embodiment of the present application.

Specifically, on the basis of satisfying $0.4 \leq ROC/Z_1 \leq 0.6$, if $0.5 \leq Z_2/Z_1 \leq 0.9$ is satisfied, stray light crosstalk can be reduced. As shown in FIG. 21, if $Z_2/Z_1$ is too large or too small, the stray light crosstalk will be increased.

Optionally, in an embodiment of the present application, the position of each light passing hole in each light shielding layer may be constrained as follows: $0 \leq S_i/Z_1 \leq 1$, preferably, in some embodiments, $0.2 \leq S_i/Z_1 \leq 0.5$, where $S_i$ represents an offset of each light passing hole in an i-th light shielding layer in the fingerprint identification unit from a center of projection of the micro lens on the i-th light shielding layer. Similarly, a depth distance between a lower surface of the i-th light shielding layer to a lower surface of the micro lens can be expressed as $Z_i$.

It should be understood that the offset $S_i$ of the center of each light passing hole in the i-th light shielding layer from the center of the projection of the micro lens on the i-th light shielding layer may be the same or different, which is not specifically limited in the embodiment of the present application.

By constraining positions of the light passing holes in the plurality of light shielding layers, target fingerprint light signals in multiple directions are transmitted to the corresponding pixel units through the light passing holes of each of the plurality of light shielding layers more accurately, and a light signal in a non-target direction can be shielded, so that influence of stray light on imaging is reduced, and image quality is further improved.

It should be noted here that, in some other embodiments, the constraint range of $S_1/Z_1$ may also be adjusted, and then the constraint range of the $ROC/Z_1$ may be adjusted according to the constraint range of the $S_1/Z_1$. As a result, by adjusting the position of the light passing hole in the bottom light shielding layer, an angle of the desired target fingerprint light signal is adjusted, and then the radius of curvature of the micro lens and the depth distance between the lower surface of the bottom light shielding layer and the lower surface of the micro lens are adjusted, so that the fingerprint identification apparatus in the embodiment of the present application can receive oblique light signals of various angles while satisfying good imaging conditions, and thus is applicable to a wider range of application scenarios.

Optionally, in an embodiment of the present application, the radius of curvature ROC of the micro lens and the depth distance $Z_1$ between the lower surface of the bottom light shielding layer and the lower surface of the micro lens may be constrained to satisfy $0.25 \leq ROC/Z_1 < 0.75$, and the maximum aperture $D_1$ of each light passing hole in the bottom light shielding layer and the maximum aperture CA of the micro lens may be constrained to satisfy $0.02 \leq D_1/CA \leq 0.4$. By combining these two constraints, requirements of improving image brightness and contrast can be further accurately met, and image quality is optimized to a large extent.

Optionally, in an embodiment of the present application, parameters of the bottom light shielding layer and parameters of the intermediate light shielding layer may also be constrained to meet certain conditions at the same time, so that requirements for improving image brightness and contrast can be further accurately met, and image quality is optimized to a large extent.

On the basis of the fingerprint identification apparatus shown in the FIGS. 3 to 5, FIG. 22 shows a schematic sectional view of another fingerprint identification apparatus 200.

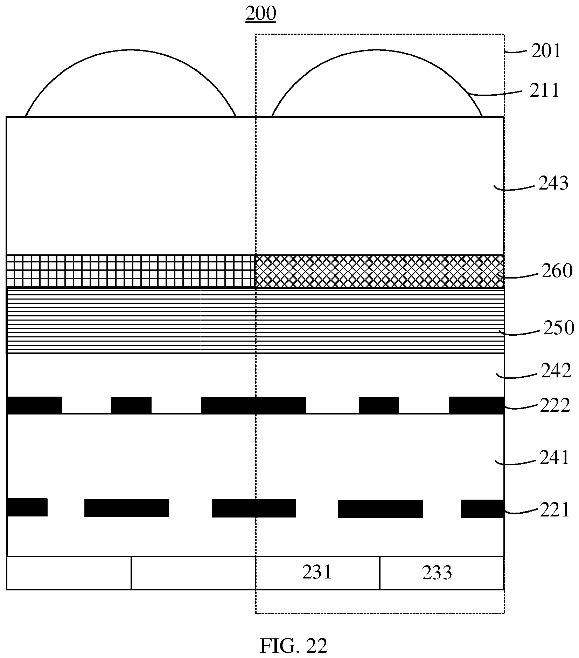

As shown in FIG. 22, in a fingerprint identification unit 201, in addition to a micro lens 211 and its corresponding four pixel units, a bottom light shielding layer 221 and an intermediate light shielding layer 222, it further includes: a protective layer 241, and the protective layer 241 is located above the bottom light shielding layer 221.

Optionally, in an embodiment of the present application, the bottom light shielding layer 221 may be integrated with the pixel unit, that is, the bottom light shielding layer and the pixel unit may be integrated in an interior of a fingerprint sensor chip of the fingerprint identification apparatus, and are internal components of the fingerprint sensor chip. Optionally, the bottom light shielding layer 221 may be a metal wiring layer located above the pixel unit in the sensor chip, that is, the bottom light shielding layer may be a metal wiring layer of the pixel unit, and is configured to transmit an electrical signal, or the bottom light shielding layer 221 may also be another material layer with low visible light transmittance.

The above protective layer 241 may also be a laminated structure in the sensor chip, which is formed on a surface of the sensor chip to protect the sensor chip from being polluted by external water vapor and particles that result in failure of sensor performance. Optionally, the protective layer 241 includes, but is not limited to, oxide of silicon and/or nitride of silicon.

It can be understood that the protective layer 241 is also a transparent material layer with high transmittance for a light signal. By setting height of the protective layer 241, a certain focusing distance can be provided for a pixel unit in the sensor chip.

As shown in FIG. 22, the intermediate light shielding layer 222 is disposed on an upper surface of the sensor chip, that is, disposed on an upper surface of the protective layer 241. This setting can reduce a distance between the bottom light shielding layer 221 and the intermediate light shielding layer 222, and improve light directing performance of a light directing channel formed in two light shielding layers.

In specific implementation, the intermediate light shielding layer 222 may be a light absorbing material of a black polymer to absorb most of the light signals in the environment.

Further, the fingerprint identification unit 201 further includes: a second transparent medium layer 242, and the second transparent medium layer 242 is disposed above the intermediate light shielding layer 222 and fills the light passing holes in the intermediate light shielding layer 222. The second transparent medium layer 242 is also a medium layer formed of an optically high transmittance material.

Optionally, the second transparent medium layer 242 may be formed above the intermediate light shielding layer 222 by a semiconductor spin coating process and a curing process and fills the light passing holes in the intermediate light shielding layer 222. By setting height of the second transparent medium layer 242, a certain focusing distance can also be provided for the pixel units in the sensor chip.

Continuing to refer to FIG. 22, the fingerprint identification unit 201 further includes: an infrared filter layer 250 configured to cut infrared light and part of red light, prevent the infrared light and part of the red light from entering the pixel unit and affect an imaging effect.

For example, in the case of strong light, infrared light in the environment is strong. If the strong infrared light enters the pixel unit, a signal of the pixel unit is easily caused to be saturated, and the infrared light easily penetrates a finger to form transmitted light of the finger. This part of the transmitted light will affect imaging of the finger reflected light in a normal fingerprint identification process. By combining two aspects of reasons, the infrared light has great influence on the fingerprint imaging, and the infrared filter layer is required for cutting and filtering.

In some embodiments, the infrared filter layer 250 includes a plurality of inorganic material layers, and the plurality of inorganic material layers may be formed by coating the second transparent medium layer 242 by a coating process, and the coating process includes, but is not limited to, a coating method such as physical vapor deposition (PVD). The plurality of inorganic material layers may be a plurality of inorganic material layers alternately grown by titanium dioxide/silicon dioxide ($TiO_2/SiO_2$), or a plurality of inorganic material layers alternatively grown by niobium pentoxide/silicon dioxide ($Nb_2O_5/SiO_2$), or may also be other organic or inorganic materials used to cut off infrared light signals, which are not limited in the embodiments of the present application.

As shown in FIG. 22, the fingerprint identification unit 201 further includes: a color filter layer 260, and the color filter layer 260 is disposed above the infrared filter layer 250 and is configured to pass a light signal of a target wavelength band and cut off a light signal in another non-target wavelength band other than the color light signal of the target wavelength band, and the color filter layer may be realized by a semiconductor photolithography process.

Optionally, the color filter layer includes, but is not limited to, a red filter layer, a blue filter layer, a green filter layer or a white filter layer, and is configured to transmit a red light signal, a blue light signal, a green light signal or a white light signal.

On the one hand, if the color filter layer is a color filter layer for transmitting a color light signal, the pixel unit in the fingerprint identification unit 201 receives the color light signal, which can be used to perform fingerprint anti-counterfeiting to determine true and false fingers. If the color filter layer is a white filter layer for transmitting a white light signal, the pixel unit in the fingerprint identification unit 201 receives a white light signal, which can be used to generate a fingerprint image for fingerprint identification. Therefore, the fingerprint identification apparatus provided by the embodiment of the present application can further perform fingerprint anti-counterfeiting judgment on the basis of fingerprint identification, so that a success rate of fingerprint identification is improved.

On the other hand, the color filter layer may be configured to absorb a light signal reflected by the infrared filter layer below the color filter layer, prevent the reflected light signal from being received by human eyes through the display screen, so as to solve an appearance problem of an under-screen fingerprint identification apparatus.

It can be understood that, if the color filter layer is a white filter layer, the color filter layer here may be a transparent medium layer or another filter material that transmits visible light. The embodiment of the present application does not specifically limit the structure of the color filter layer.

Continuing to refer to FIG. 22, above the color filter layer 260, the fingerprint identification unit 201 further includes: a third transparent medium layer 243, and the third transparent medium layer 243 is disposed between the micro lens 211 and the color filter layer 260.

Optionally, the third transparent medium layer 243 is also a medium layer formed of an optically high transmittance material, which can be formed above the color filter layer 260 by a semiconductor spin coating process and a curing process. And by setting height of the third transparent medium layer 243, a certain focusing distance can be provided for a pixel unit in the sensor chip.

The uppermost layer of the fingerprint identification unit 201 is the micro lens 211, a material of which is generally an optically transparent organic material. Size and shape of the micro lens 211 may be designed through a semiconductor lithography process, and formed through a thermal reflow process. The micro lens 211 may be a spherical micro lens or an aspherical micro lens.

On the basis of the fingerprint identification apparatus shown in the FIGS. 6 to 8, FIG. 23 shows a schematic sectional view of another fingerprint identification apparatus 200.

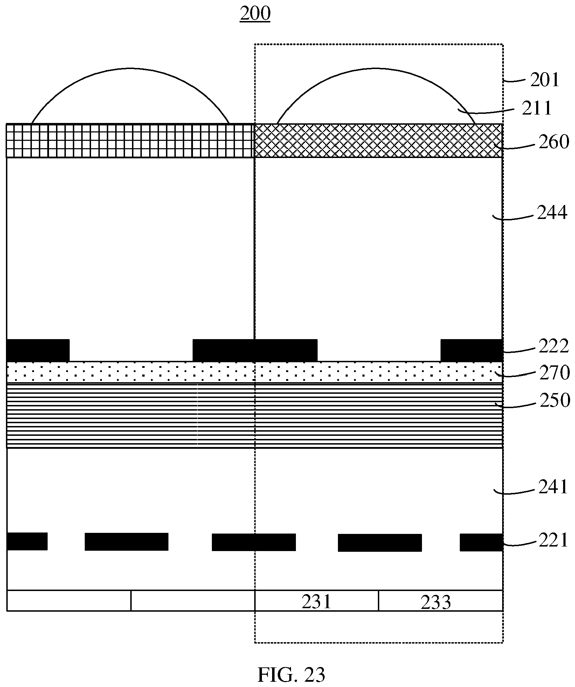

As shown in FIG. 23, in the fingerprint identification unit 201, in addition to the micro lens 211 and its corresponding four pixel units, a bottom light shielding layer 221 and an intermediate light shielding layer 222, it further includes: a protective layer 241, and the protective layer 241 is located above the bottom light shielding layer 221.

Optionally, as shown in FIG. 23, the fingerprint identification unit 201 further includes: an infrared filter layer 250, and the infrared filter layer 250 is formed on a surface of the protective layer 241 and configured to cut an infrared light signal.

Further, above the infrared filter layer 250, the fingerprint identification unit 201 further includes: an adhesive layer 270 configured to connect the intermediate light shielding layer 222 and the infrared filter layer 250.

Optionally, the adhesive layer 270 may be an organic material layer of optically high transmittance coated on the infrared filter layer 250, which can be realized by a semiconductor spin coating process and a curing process. The adhesive layer 270 may be a flat transparent layer with a flat surface, so as to prevent warpage of the infrared filter layer 250 formed by a plurality of organic material layers from affecting flatness of the intermediate light shielding layer 222, and further prevent an imaging effect from being affected.

Continuing to refer to FIG. 23, a first transparent medium layer 244 is further formed above the intermediate light shielding layer 222. The first transparent medium layer 244 may be formed above the intermediate light shielding layer 222 through a semiconductor spin coating process and a curing process and fills the light passing holes in the intermediate light shielding layer 222. By setting height of the first transparent medium layer 244, a certain focusing distance can be provided for a pixel unit in the sensor chip.

Optionally, the fingerprint identification unit 201 further includes: a color filter layer 260, and the color filter layer 260 is disposed above the first transparent medium layer 244 and connects the first transparent medium layer 244 and the micro lens 211. The color filter layer 260 is configured to transmit a light signal of a target wavelength band, and cut off a light signal of another non-target wavelength band other than the color light signal of the target wavelength band. Likewise, the color filter layer includes, but is not limited to, a red filter layer, a blue filter layer, a green filter layer or a white filter layer for transmitting a red light signal, a blue light signal, a green light signal or a white light signal.

Specifically, for the related technical solutions of the protective layer 241, the bottom light shielding layer 221, the intermediate light shielding layer 222, the infrared filter layer 250, and the color filter layer 260 in the embodiments of the present application, reference may be made to the relevant description in FIG. 22 above, and details will not be repeated here.

The structures of various fingerprint identification apparatuses proposed in the present application and the constraints of the parameters therein are described above. The following Tables 1 and 2 show numerical values of the parameters and numerical values of the constraints in the fingerprint identification apparatus of several specific embodiments, where the unit of each parameter in Table 1 is micrometer ($\mu$m), and the unit of $P_b$ parameter in Table 2 is $\mu$m.

**Table 1**

| Parameter | Example 1 | Example 2 | Example 3 | Example 4 | Example 5 | Example 6 | Example 7 |
|---|---|---|---|---|---|---|---|
| $P_a$ | 10.50 | 14.00 | 11.50 | 10.00 | 10.00 | 12.50 | 7.50 |
| $P_b$ | 21.00 | 28.00 | 23.00 | 20.00 | 20.00 | 25.00 | 15.00 |
| CA | 16.15 | 21.85 | 18.50 | 19.00 | 19.50 | 23.50 | 14.50 |

(continued)

| Parameter | Example 1 | Example 2 | Example 3 | Example 4 | Example 5 | Example 6 | Example 7 |
|---|---|---|---|---|---|---|---|
| MLH | 4.20 | 5.80 | 4.80 | 5.00 | 6.10 | 8.90 | 3.00 |
| ROC | 9.86 | 13.19 | 11.31 | 11.53 | 10.84 | 12.21 | 10.26 |
| $Z_1$ | 23.30 | 27.57 | 20.93 | 22.64 | 21.91 | 24.06 | 18.23 |
| S1 | 8.20 | 9.62 | 7.51 | 7.60 | 6.05 | 10.08 | 5.09 |
| $D_1$ | 2.38 | 2.70 | 2.18 | 2.40 | 2.00 | 2.70 | 1.84 |
| $Z_2$ | 15.25 | 16.82 | 17.54 | 18.89 | 18.37 | 19.85 | 15.11 |
| $D_2$ | 13.30 | 15.88 | 18.10 | 18.43 | 16.02 | 25.05 | 12.48 |

An embodiment in Table 1 corresponds to the fingerprint identification unit 201 and the fingerprint identification apparatus 200 shown in FIG. 3 and FIG. 21.

Based on values of the parameters in Table 1, the following Table 2 exemplarily presents calculated values of different constraints in various embodiments.

**Table 2**

| Constraints | Example 1 | Example 2 | Example 3 | Example 4 | Example 5 | Example 6 | Example 7 |
|---|---|---|---|---|---|---|---|
| $ROC/Z_1$ | 0.42 | 0.48 | 0.54 | 0.51 | 0.49 | 0.51 | 0.56 |
| $D_1/CA$ | 0.15 | 0.12 | 0.12 | 0.13 | 0.10 | 0.11 | 0.13 |
| $S1/Z_1$ | 0.35 | 0.35 | 0.36 | 0.34 | 0.28 | 0.42 | 0.28 |
| $P_b$ | 21.00 | 28.00 | 23.00 | 20.00 | 20.00 | 25.00 | 15.00 |
| $P_b/P_a$ | 2.00 | 2.00 | 2.00 | 2.00 | 2.00 | 2.00 | 2.00 |
| $D_2/CA$ | 0.82 | 0.73 | 0.98 | 0.97 | 0.82 | 1.07 | 0.86 |
| $Z_2/Z_1$ | 0.65 | 0.61 | 0.84 | 0.83 | 0.84 | 0.82 | 0.83 |

As shown in Table 2, parameters in the fingerprint identification apparatus may also be designed by using constraint values involved in Table 2, instead of being limited to the specific parameters listed in various embodiments in Table 1.

It should be noted that the embodiments of the present application are not limited to the foregoing specific values, and those skilled in the art may determine specific values of various parameters according to actual light path design requirements. For example, the foregoing parameters may be accurate to three or four decimal places.

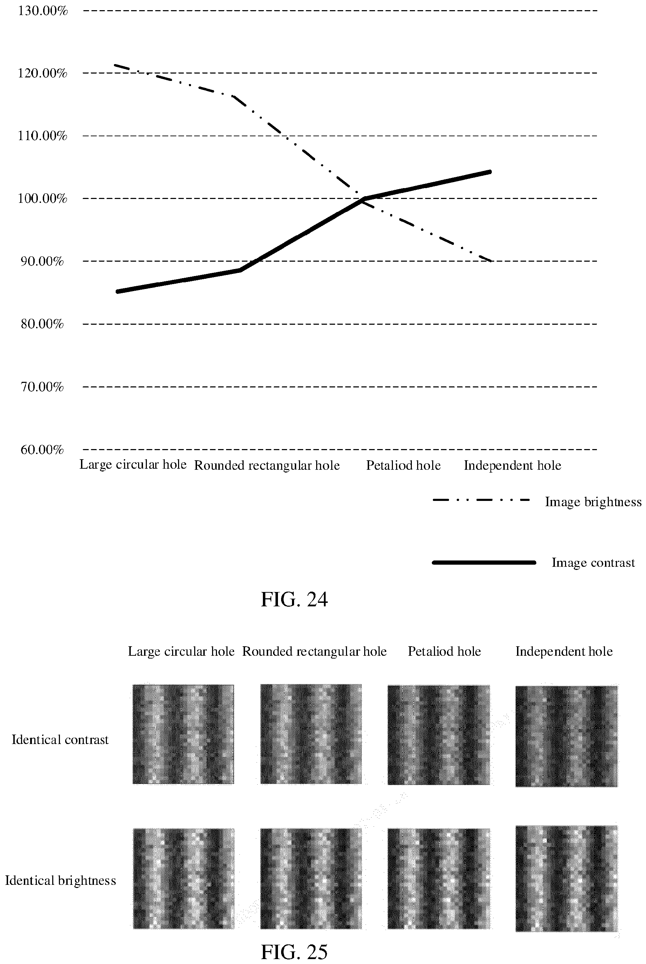

Based on the example 2 in Table 1 and Table 2, FIG. 24 shows a curve graph of contrast and brightness of an image captured by a fingerprint identification apparatus 200 as a function of a shape of a hole of an intermediate light shielding layer 222. Specifically, image contrast and image brightness corresponding to the shape of the hole of the intermediate light shielding layer 222 are shown in Table 3.

**Table 3**

| | Image contrast | Image brightness |
|---|---|---|
| Large circular through hole | 84.70% | 121.11% |
| Rounded rectangular through hole | 88.16% | 116.31% |
| Petaloid through hole | 100% | 100% |
| Independent hole | 104.85% | 90.24% |

FIG. 25 shows a schematic diagram of captured images when a hole of intermediate light shielding layer is the above four types of shapes. It is obvious from FIGS. 24 and 25 that in a case of the same contrast, image brightness decreases sequentially from a large circular through hole to an independent hole. In a case of the same brightness, image contrast increases sequentially from a large circular through hole to an independent hole. However, all of the four hole shapes can obtain relatively clear images.

The preferred embodiments of the claimed subject-matter are described in detail above with reference to the accompanying drawings. However, a variety of simple variants may be carried out on the technical solutions of the present application, as long as they fall within the scope of the appended claims.

For example, various specific technical features described in the foregoing specific embodiments may be combined in any suitable manner under the condition of no contradiction. In order to avoid unnecessary repetition, various possible combination ways will not be separately described in the present application.

For another example, any combination of various different embodiments of the present application may also be made as long as they fall within the scope of the apended claims.

It should be understood that sequence numbers of the foregoing processes do not mean execution sequences in various method embodiments of the present application. The execution sequences of the processes should be determined according to functions and internal logic of the processes, and should not be construed as any limitation on the implementation processes of the embodiments of the present application.

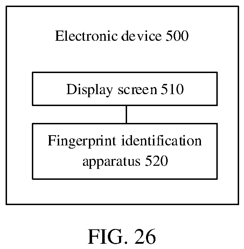

As shown in FIG. 26, an embodiment of the present application further provides an electronic device 500, and the electronic device may include a display screen 510 and the fingerprint identification apparatus 520 of the above embodiments of the present application, where the fingerprint identification apparatus is disposed under the display screen to implement under-screen optical fingerprint identification.

The electronic device 500 may be any electronic device having a display screen.

As an optional embodiment, the display screen 510 may adopt a display screen having a self-emitting display unit, for example, an organic light-emitting diode (OLED) display screen or a micro light-emitting diode (Micro-LED) display screen. In an example of an OLED display screen, the fingerprint identification apparatus 520 may use a display unit (that is, an OLED light source) of the OLED display screen 510 located in a fingerprint detection region as an excitation light source for optical fingerprint detection.

In other embodiments, the fingerprint identification apparatus 500 may also use an internal light source or an external light source to provide a light signal for fingerprint detection. In this case, the fingerprint identification apparatus 500 may be applied to a non-self-emitting display screen, such as a liquid crystal display screen or other passive light-emitting display screens.

For the application of the fingerprint identification apparatus in the electronic device, reference may be made to the relevant description of an under-screen fingerprint identification system. For the sake of brevity, no excessive description is given here.

It should be understood that specific examples in embodiments of the present application are just for helping those skilled in the art better understand the embodiments of the present application, rather than for limiting the scope of protection as defined by the appended claims.

It should be understood that terms used in embodiments of the present application and the claims appended hereto are merely for the purpose of describing particular embodiments, and are not intended to limit the embodiments of the present application. For example, the use of a singular form of "a", "the" and "said" in the embodiments of the present application and the claims appended hereto are also intended to include a plural form, unless otherwise clearly indicated herein by context.

Those of ordinary skill in the art may be aware that, units of the examples described in the embodiments disclosed in this paper may be implemented by electronic hardware, computer software, or a combination of the two. To clearly illustrate interchangeability between the hardware and the software, the foregoing illustration has generally described composition and steps of the examples according to functions. Whether these functions are performed by hardware or software depends on particular applications and designed constraints of the technical solutions. Persons skilled in the art may use different methods to implement the described functions, as long as they fall within the scope of the appended claims.

In the several embodiments provided in the present application, it should be understood that, the disclosed system and apparatus may be implemented in other manners. For example, the foregoing described apparatus embodiments are merely exemplary. For example, division of the units is merely logical function division and there may be other division manners in practical implementation. For example, multiple units or components may be combined or integrated into another system, or some features may be ignored or not executed. In addition, the displayed or discussed mutual coupling or direct coupling or communication connection may be indirect coupling or communication connection through some interfaces, apparatuses or units, and may also be electrical, mechanical, or connection in other forms.

The units described as separate parts may or may not be physically separate, and parts displayed as units may or may not be physical units, may be located in one position, or may be distributed on multiple network units. Some or all of the units may be selected depending on actual requirements to achieve the objectives of the solutions of the embodiments of the present application.

In addition, functional units in the embodiments of the present application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in the embodiments of the present application. The foregoing storage medium includes a variety of media capable of storing program codes, such as a USB disk, a mobile hard disk, a read-only memory (ROM), a random access memory (RAM), a magnetic disk, and an optical disk.

The foregoing description is only a specific implementation manner of the present application. The protection scope is, however, only limited by the scope of the appended claims. Various modifications or replacements may be readily conceivable to any person skilled in the art within the technical scope of the appended claims. Therefore, the protection scope of the present application shall be subject to the protection scope of the claims.

**Claims**

1. A fingerprint identification apparatus, wherein the fingerprint identification apparatus is applied under a display screen to implement under-screen optical fingerprint identification, and the fingerprint identification apparatus comprises a plurality of fingerprint identification units (201) distributed in an array, and each of the plurality of fingerprint identification units (201) comprises:

   a plurality of pixel units (231, 232, 233, 234);
   a micro lens (211) disposed above the plurality of pixel units (231, 232, 233, 234); and
   a plurality of light shielding layers (221, 222) disposed between the micro lens (211) and the plurality of pixel units (231, 232, 233, 234), wherein each of the plurality of light shielding layers (221, 222) is provided with light passing holes (2221, 2211) corresponding to the plurality of pixel units (231, 232, 233, 234) so as to from a plurality of light directing channels in one-to-one correspondence with the plurality of pixel units (231, 232,233,234);
   wherein the plurality of pixel units (231, 232, 233, 234) are respectively configured to receive a plurality of fingerprint light signals reflected or scattered from a finger above the display screen, converged by the micro (lens (211), and transmitted through the plurality of light directing channels, and the plurality of fingerprint light signals are used to detect fingerprint information of the finger for fingerprint identification;
   wherein the plurality of light shielding layers comprise a bottom light shielding layer (221) and an intermediate light shielding layer (222), the intermediate light shielding layer (222) comprises a light shielding layer other than the bottom light shielding layer (221), a light passing aperture $D_2$ of a light passing region formed by light passing holes (2221) in the intermediate light shielding layer that are corresponding to the plurality of pixel units (231, 232, 233, 234) and a maximum aperture CAof the micro lens satisfy $0.3 \leq D_2/CA \leq 1.3$, and $D_2$ is a distance between two farthest points in the light passing region on a plane where the intermediate light shielding layer (222) is located;
   **characterized in that** the depth $Z_2$ between the lower surface of the intermediate light shielding layer (222) and the lower surface of the micro lens (211) and the depth $Z_1$ between the lower surface of the bottom light shielding layer (221) and the lower surface of the micro lens (211) satisfy $0.3 \leq Z_2/Z_1 \leq 0.75$, and the light passing aperture $D_2$ of the light passing region and the maximum aperture CA of the micro lens satisfy $0.5 \leq D_2/CA \leq 0.8$, and a shape of the light passing region is a petal, wherein the petal is formed by the light passing holes in the intermediate light shielding layer (222) partially overlapping or intersecting with each other and the number of petals is related to the number of pixel units included in a fingerprint identificationunit (201).

2. The fingerprint identification apparatus according to claim 1, wherein a maximum aperture $D_1$ of each light passing hole in the bottom light shielding layer and the maximum aperture CAof the micro lens satisfy $0.02 \leq D_1/CA \leq 0.4$.

3. The fingerprint identification apparatus according to any one of claims 1 to 2, wherein a radius of curvature, ROC, of the micro lens and a depth distance $Z_1$ between a lower surface of the bottom light shielding layer and a lower surface of the micro lens satisfy $0.25 \leq ROC/Z_1 \leq 0.75$.

4. The fingerprint identification apparatus according to any one of claims 1 to 3, wherein a position of each light passing hole in an i-th light shielding layer of the plurality of light shielding layers from bottom to top satisfies $0 \leq S_i/Z_1 \leq 1$, wherein $S_i$ is a distance between a center of each light passing hole in the i-th light shielding layer to a center of projection of the micro lens on the i-th light shielding layer.

5. The fingerprint identification apparatus according to any one of claims 1 to 4, wherein each light passing hole in the bottom light shielding layer is a circular hole of a same size, and the bottom light shielding layer is a metal wiring layer on a surface of the plurality of pixel units.

6. The fingerprint identification apparatus according to any one of claims 1 to 5, wherein an arrangement period $P_b$ of micro lenses in the fingerprint identification apparatus and an arrangement period $P_a$ of the pixel units in the fingerprint identification apparatus satisfy $1 < P_b/P_a \leq 4$; and
an arrangement period $P_b$ of micro lenses in the fingerprint identification apparatus satisfies $5 \mu m < P_b \leq 40 \mu m$.

7. The fingerprint identification apparatus according to any one of claims 1 to 6, wherein the fingerprint identification unit further comprises: a protective layer; and
the protective layer is disposed above the bottom light shielding layer, and is integrated with the bottom light shielding layer and the plurality of pixel units.

8. The fingerprint identification apparatus according to claim 7, wherein the light passing holes of the plurality of light directing channels in the intermediate light shielding layer overlap.

9. The fingerprint identification apparatus according to claim 8, wherein the fingerprint identification unit further comprises: an infrared filter layer, wherein the infrared filter layer is a filter layer coated and grown on a surface of a sensor chip, and is configured to cut infrared light;

an adhesive layer, wherein the adhesive layer is a flat transparent layer coated on a surface of the infrared filter layer, and the intermediate light shielding layer is disposed above the adhesive layer;
a first transparent medium layer disposed above the intermediate light shielding layer and fills the light passing holes in the intermediate light shielding layer; and
a color filter layer disposed between the micro lens and the first transparent medium layer, wherein the color filter layer comprises a red filter layer, a blue filter layer, a green filter layer or a white filter layer.

10. The fingerprint identification apparatus according to claim 7, wherein light passing holes of the plurality of light directing channels in the intermediate light shielding layer are independent of each other.

11. The fingerprint identification apparatus according to claim 10, wherein the intermediate light shielding layer is disposed on an upper surface of the protective layer; and
wherein the fingerprint identification unit further comprises:

a second transparent medium layer disposed above the intermediate light shielding layer and fills the light passing holes in the intermediate light shielding layer;
an infrared filter layer, wherein the infrared filter layer is a filter layer coated and grown on a surface of the second transparent medium layer, and is configured to cut infrared light;
a color filter layer disposed above the infrared filter layer, wherein the color filter layer comprises a red filter layer, a blue filter layer, a green filter layer or a white filter layer; and
a third transparent medium layer disposed between the micro lens and the color filter layer.

12. An electronic device, comprising:

a display screen; and
the fingerprint identification apparatus according to any one of claims 1 to 11, wherein the fingerprint identification apparatus is disposed under the display screen to implement under-screen optical fingerprint identification.

**Patentansprüche**

1. Fingerabdruck-Identifikationsgerät, wobei das Fingerabdruck-Identifikationsgerät unter einem Anzeigebildschirm angewandt wird, um optische Fingerabdruck-Identifikation unter einer Anzeige zu implementieren, und das Fingerabdruck-Identifikationsgerät eine Vielzahl von Fingerabdruck-Identifikationseinheiten (201) umfasst, die in einer Anordnung verteilt sind, und jede der Vielzahl von Fingerabdruck-Identifikationseinheiten (201) umfasst:

eine Vielzahl von Bildpunkteinheiten (231, 232, 233, 234);
eine Mikrolinse (211), angeordnet über der Vielzahl von Bildpunkteinheiten (231, 232, 233, 234), und
eine Vielzahl von Lichtabschirmschichten (221, 222), angeordnet zwischen der Mikrolinse (211) und der Vielzahl von Bildpunkteinheiten (231, 232, 233, 234), wobei jede der Vielzahl von Lichtabschirmschichten (221, 222) mit Lichtdurchgangslöchern (2221, 2211) korrespondierend mit der Vielzahl von Bildpunkteinheiten (231, 232, 233, 234) versehen ist, um eine Vielzahl von Lichtlenkungskanälen in einer Eins-zu-eins-Korrespondenz mit der Vielzahl von Bildpunkteinheiten (231, 232, 233, 234) zu bilden;
wobei die Vielzahl von Bildpunkteinheiten (231, 232, 233, 234) jeweils konfiguriert ist zum Empfangen einer Vielzahl von Fingerabdrucklichtsignalen, reflektiert oder gestreut von einem Finger über dem Anzeigebildschirm, konvergiert durch die Mikrolinse (211) und übertragen durch die Vielzahl von Lichtlenkungskanälen, und die Vielzahl von Fingerabdrucklichtsignalen verwendet wird, Fingerabdruckinformationen des Fingers für Fingerabdruckidentifikation zu detektieren;
wobei die Vielzahl von Lichtabschirmschichten eine untere Lichtabschirmschicht (221) und eine zwischenliegende Lichtabschirmschicht (222) umfasst, die zwischenliegende Lichtabschirmschicht (222) eine andere Lichtabschirmschicht als die untere Lichtabschirmschicht (221) umfasst, eine Lichtdurchgangsöffnung $D_2$ einer Lichtdurchgangsregion, gebildet durch Lichtdurchgangslöcher (2221) in der zwischenliegenden Lichtabschirmschicht, die mit der Vielzahl von Bildpunkteinheiten (231, 232, 233, 234) korrespondieren, und eine maximale Öffnung CA der Mikrolinse $0{,}3 \leq D_2/CA \leq 1{,}3$ erfüllen, und $D_2$ eine Distanz zwischen zwei am weitesten voneinander entfernten Punkten in der Lichtdurchgangsregion auf einer Ebene, auf der sich die zwischenliegende Lichtabschirmschicht (222) befindet, ist;
**dadurch gekennzeichnet, dass** die Tiefe $Z_2$ zwischen der unteren Oberfläche der zwischenliegenden Lichtabschirmschicht (222) und der unteren Oberfläche der Mikrolinse (211) und die Tiefe $Z_1$ zwischen der unteren Oberfläche der unteren Lichtabschirmschicht (221) und der unteren Oberfläche der Mikrolinse (211) $0{,}3 \leq Z_2/Z_1 \leq 0{,}75$ erfüllen und die Lichtdurchgangsöffnung $D_2$ der Lichtdurchgangsregion und die maximale Öffnung CA der Mikrolinse $0{,}5 \leq D_2/CA \leq 0{,}8$ erfüllen und eine Form der Lichtdurchgangsregion ein Blütenblatt ist, wobei das Blütenblatt durch die Lichtdurchgangslöcher in der zwischenliegenden Lichtabschirmschicht (222), die sich gegeneinander teilweise überlappen oder überschneiden, gebildet wird und die Anzahl von Blütenblättern zu der Anzahl von Bildpunkteinheiten, die in einer Fingerabdruck-Identifikationseinheit (201) enthalten sind, in Beziehung steht.

2. Fingerabdruck-Identifikationsgerät nach Anspruch 1, wobei eine maximale Öffnung $D_1$ jedes Lichtdurchgangslochs in der unteren Lichtabschirmschicht und die maximale Öffnung CA der Mikrolinse $0{,}02 \leq D_1/CA \leq 0{,}4$ erfüllen.

3. Fingerabdruck-Identifikationsgerät nach einem der Ansprüche 1 bis 2, wobei ein Krümmungsradius, ROC, der Mikrolinse und eine Tiefendistanz $Z_1$ zwischen einer unteren Oberfläche der unteren Lichtabschirmschicht und einer unteren Oberfläche der Mikrolinse $0{,}25 \leq ROC/Z_1 \leq 0{,}75$ erfüllen.

4. Fingerabdruck-Identifikationsgerät nach einem der Ansprüche 1 bis 3, wobei eine Position jedes Lichtdurchgangslochs in einer i-ten Lichtabschirmschicht der Vielzahl von Lichtabschirmschichten von unten nach oben $0 \leq S_i/Z_1 \leq 1$ erfüllt, wobei $S_i$ eine Distanz zwischen einer Mitte jedes Lichtdurchgangslochs in der i-ten Lichtabschirmschicht und einer Projektionsmitte der Mikrolinse auf der i-ten Lichtabschirmschicht ist.

5. Fingerabdruck-Identifikationsgerät nach einem der Ansprüche 1 bis 4, wobei jedes Lichtdurchgangsloch in der unteren Lichtabschirmschicht ein kreisförmiges Loch einer gleichen Größe ist und die untere Lichtabschirmschicht eine Metallverdrahtungsschicht auf einer Oberfläche der Vielzahl von Bildpunkteinheiten ist.

6. Fingerabdruck-Identifikationsgerät nach einem der Ansprüche 1 bis 5, wobei eine Anordnungsperiode $P_b$ von Mikrolinsen in dem Fingerabdruck-Identifikationsgerät und eine Anordnungsperiode $P_a$ der Bildpunkteinheiten in dem Fingerabdruck-Identifikationsgerät $1 < P_b/P_a \leq 4$ erfüllen; und
eine Anordnungsperiode $P_b$ von Mikrolinsen in dem Fingerabdruck-Identifikationsgerät $5\,\mu m \leq P_b \leq 40$ um erfüllt.

7. Fingerabdruck-Identifikationsgerät nach einem der Ansprüche 1 bis 6,

wobei die Fingerabdruck-Identifikationseinheit ferner umfasst: eine Schutzschicht; und

die Schutzschicht über der unteren Lichtabschirmschicht angeordnet ist und mit der unteren Lichtabschirmschicht und der Vielzahl von Bildpunkteinheiten integriert ist.

8. Fingerabdruck-Identifikationsgerät nach Anspruch 7, wobei die Lichtdurchgangslöcher der Vielzahl von Lichtlenkungskanälen sich in der zwischenliegenden Lichtabschirmschicht überlappen.

9. Fingerabdruck-Identifikationsgerät nach Anspruch 8, wobei die Fingerabdruck-Identifikationseinheit ferner umfasst:
eine Infrarotfilterschicht, wobei die Infrarotfilterschicht eine Filterschicht ist, beschichtet und aufgewachsen auf einer Oberfläche eines Sensorchips, und konfiguriert ist zum Unterbrechen von Infrarotlicht;

eine Klebeschicht, wobei die Klebeschicht eine flache transparente Schicht ist, beschichtet auf einer Oberfläche der Infrarotfilterschicht, und die zwischenliegende Lichtabschirmschicht über der Klebeschicht angeordnet ist;
eine erste transparente mittlere Schicht, angeordnet über der zwischenliegenden Lichtabschirmschicht, und die die Lichtdurchgangslöcher in der zwischenliegenden Lichtabschirmschicht füllt; und
eine Farbfilterschicht, angeordnet zwischen der Mikrolinse und der ersten transparenten mittleren Schicht, wobei die Farbfilterschicht eine Rotfilterschicht, eine Blaufilterschicht, eine Grünfilterschicht oder eine Weißfilterschicht umfasst.

10. Fingerabdruck-Identifikationsgerät nach Anspruch 7, wobei Lichtdurchgangslöcher der Vielzahl von Lichtlenkungskanälen in der zwischenliegenden Lichtabschirmschicht unabhängig voneinander sind.

11. Fingerabdruck-Identifikationsgerät nach Anspruch 10, wobei die zwischenliegende Lichtabschirmschicht auf einer oberen Oberfläche der Schutzschicht angeordnet ist; und
wobei die Fingerabdruck-Identifikationseinheit ferner umfasst:

eine zweite transparente mittlere Schicht, angeordnet über der zwischenliegenden Lichtabschirmschicht, und die die Lichtdurchgangslöcher in der zwischenliegenden Lichtabschirmschicht füllt;
eine Infrarotfilterschicht, wobei die Infrarotfilterschicht eine Filterschicht ist, beschichtet und aufgewachsen auf einer Oberfläche der zweiten transparenten mittleren Schicht, und die zum Unterbrechen von Infrarotlicht konfiguriert ist;
eine Farbfilterschicht, angeordnet über der Infrarotfilterschicht, wobei die Farbfilterschicht eine Rotfilterschicht, eine Blaufilterschicht, eine Grünfilterschicht oder eine Weißfilterschicht umfasst; und
eine dritte transparente mittlere Schicht, angeordnet zwischen der Mikrolinse und der Farbfilterschicht.

12. Elektronische Vorrichtung, umfassend:

einen Anzeigebildschirm; und
das Fingerabdruck-Identifikationsgerät nach einem der Ansprüche 1 bis 11,
wobei das Fingerabdruck-Identifikationsgerät unter dem Anzeigebildschirm angeordnet ist, um optische Fingerabdruck-Identifikation unter einer Anzeige zu implementieren.

**Revendications**

1. Appareil d'identification d'empreintes digitales, l'appareil d'identification d'empreintes digitales étant appliqué sous un écran d'affichage pour mettre en œuvre une identification optique d'empreintes digitales sous l'écran, et l'appareil d'identification d'empreintes digitales comprenant une pluralité d'unités d'identification d'empreintes digitales (201) réparties dans un réseau, et chacune de la pluralité d'unités d'identification d'empreintes digitales (201) comprenant :

une pluralité d'unités de pixels (231, 232, 233, 234) ;
une microlentille (211) disposée au-dessus de la pluralité d'unités de pixels (231, 232, 233, 234) ; et une pluralité de couches de protection contre la lumière (221, 222) disposées entre la microlentille (211) et la pluralité d'unités de pixels (231, 232, 233, 234), où chacune de la pluralité de couches de protection contre la lumière (221, 222) est pourvue de trous de passage de la lumière (2221, 2211) correspondant à la pluralité d'unités de pixels (231, 232, 233, 234) de manière à former une pluralité de canaux de direction de la lumière en correspondance biunivoque avec la pluralité d'unités de pixels (231, 232, 233, 234) ;
la pluralité d'unités de pixels (231, 232, 233, 234) étant respectivement configurée pour recevoir une pluralité de signaux lumineux d'empreintes digitales réfléchis ou diffusés par un doigt au-dessus de l'écran d'affichage, convergés par la microlentille (211) et transmis par la pluralité de canaux de direction de la lumière, et la pluralité de signaux lumineux d'empreintes digitales étant utilisés pour détecter les informations d'empreintes digitales du doigt pour l'identification des empreintes digitales ;

la pluralité de couches de protection contre la lumière comprenant une couche inférieure de protection contre la lumière (221) et une couche intermédiaire de protection contre la lumière (222), la couche intermédiaire de protection contre la lumière (222) comprenant une couche de protection contre la lumière autre que la couche inférieure de protection contre la lumière (221), une ouverture de passage de la lumière $D_2$ d'une région de passage de la lumière formée par des trous de passage de la lumière (2221) dans la couche intermédiaire de protection contre la lumière qui correspondent à la pluralité d'unités de pixels (231, 232, 233, 234) et une ouverture maximale CA de la microlentille satisfaisant à $0,3 \leq D_2/CA \leq 1,3$, et $D_2$ étant une distance entre les deux points les plus éloignés dans la région de passage de la lumière sur un plan où la couche intermédiaire de protection contre la lumière (222) est située ;

**caractérisé en ce que** la profondeur $Z_2$ entre la surface inférieure de la couche intermédiaire de protection contre la lumière (222) et la surface inférieure de la microlentille (211) et la profondeur $Z_1$ entre la surface inférieure de la couche inférieure de protection contre la lumière (221) et la surface inférieure de la microlentille (211) satisfont à $0,3 \leq Z_2/Z_1 \leq 0,75$, et l'ouverture de passage de la lumière $D_2$ de la région de passage de la lumière et l'ouverture maximale CA de la microlentille satisfont à $0,5 \leq D_2/CA \leq 0,8$, et une forme de la région de passage de la lumière est un pétale, où le pétale est formé par les trous de passage de la lumière dans la couche intermédiaire de protection contre la lumière (222) se chevauchant ou se croisant partiellement, et le nombre de pétales est lié au nombre d'unités de pixels incluses dans une unité d'identification d'empreintes digitales (201).

2. Appareil d'identification d'empreintes digitales selon la revendication 1, dans lequel une ouverture maximale $D_1$ de chaque trou de passage de la lumière dans la couche inférieure de protection contre la lumière et l'ouverture maximale CA de la microlentille satisfont à $0,02 \leq D_1/CA \leq 0,4$.

3. Appareil d'identification d'empreintes digitales selon l'une quelconque des revendications 1 et 2, dans lequel un rayon de courbure, ROC, de la microlentille et une distance de profondeur $Z_1$ entre une surface inférieure de la couche inférieure de protection contre la lumière et une surface inférieure de la microlentille satisfont à $0,25 \leq ROC/Z_1 \leq 0,75$.

4. Appareil d'identification d'empreintes digitales selon l'une quelconque des revendications 1 à 3, dans lequel la position de chaque trou de passage de la lumière dans une $i^{ème}$ couche de protection contre la lumière de la pluralité de couches de protection contre la lumière, de bas en haut, satisfait à $0 \leq S_i/Z_i \leq 1$, Si étant la distance entre le centre de chaque trou de passage de la lumière dans la $i^{ème}$ couche de protection contre la lumière et le centre de projection de la microlentille sur la $i^{ème}$ couche de protection contre la lumière.

5. Appareil d'identification d'empreintes digitales selon l'une quelconque des revendications 1 à 4, dans lequel chaque trou de passage de la lumière dans la couche inférieure de protection contre la lumière est un trou circulaire de même taille, et la couche inférieure de protection contre la lumière est une couche de câblage métallique sur une surface de la pluralité d'unités de pixels.

6. Appareil d'identification d'empreintes digitales selon l'une quelconque des revendications 1 à 5, dans lequel une période d'agencement $P_b$ des microlentilles dans l'appareil d'identification d'empreintes digitales et une période d'agencement $P_a$ des unités de pixels dans l'appareil d'identification d'empreintes digitales satisfont à $1 \leq P_b/P_a \leq 4$ ; et une période d'agencement $P_b$ des microlentilles dans l'appareil d'identification d'empreintes digitales satisfait à $5$ um $\leq P_b \leq 40$ um.

7. Appareil d'identification d'empreintes digitales selon l'une quelconque des revendications 1 à 6,
dans lequel l'unité d'identification d'empreintes digitales comprend en outre :

une couche protectrice ; et
la couche protectrice est disposée au-dessus de la couche inférieure de protection contre la lumière et est intégrée à la couche inférieure de protection contre la lumière et à la pluralité d'unités de pixels.

8. Appareil d'identification d'empreintes digitales selon la revendication 7, dans lequel les trous de passage de la lumière de la pluralité de canaux de direction de la lumière dans la couche intermédiaire de protection contre la lumière se chevauchent.

**9.** Appareil d'identification d'empreintes digitales selon la revendication 8, dans lequel l'unité d'identification d'empreintes digitales comprend en outre :

une couche de filtre infrarouge, la couche de filtre infrarouge étant une couche de filtre enduite et développée sur la surface d'une puce de capteur, et étant configurée pour bloquer la lumière infrarouge ;
une couche adhésive, la couche adhésive étant une couche transparente plate enduite sur une surface de la couche de filtre infrarouge, et la couche intermédiaire de protection contre la lumière étant disposée au-dessus de la couche adhésive ;
une première couche de milieu transparent disposée au-dessus de la couche intermédiaire de protection contre la lumière et remplissant les trous de passage de la lumière dans la couche intermédiaire de protection contre la lumière ; et
une couche de filtre de couleur disposée entre la microlentille et la première couche de milieu transparent, la couche de filtre de couleur comprenant une couche de filtre rouge, une couche de filtre bleu, une couche de filtre vert ou une couche de filtre blanc.

**10.** Appareil d'identification d'empreintes digitales selon la revendication 7, dans lequel les trous de passage de la lumière de la pluralité de canaux de direction de la lumière dans la couche intermédiaire de protection contre la lumière sont indépendants les uns des autres.

**11.** Appareil d'identification d'empreintes digitales selon la revendication 10, dans lequel la couche intermédiaire de protection contre la lumière est disposée sur une surface supérieure de la couche de protection ; et
dans lequel l'appareil d'identification d'empreintes digitales comprend en outre :

une deuxième couche de milieu transparent disposée au-dessus de la couche intermédiaire de protection contre la lumière et remplissant les trous de passage de la lumière dans la couche intermédiaire de protection contre la lumière ;
une couche de filtre infrarouge, la couche de filtre infrarouge étant une couche de filtre enduite et développée sur une surface de la deuxième couche de milieu transparent, et étant configurée pour bloquer la lumière infrarouge ;
une couche de filtre de couleur disposée au-dessus de la couche de filtre infrarouge, la couche de filtre de couleur comprenant une couche de filtre rouge, une couche de filtre bleu, une couche de filtre vert ou une couche de filtre blanc ; et
une troisième couche de milieu transparent disposée entre la microlentille et la couche de filtre de couleur.

**12.** Dispositif électronique comprenant :

un écran d'affichage ; et
l'appareil d'identification d'empreintes digitales selon l'une quelconque des revendications 1 à 11, l'appareil d'identification d'empreintes digitales étant disposé sous l'écran d'affichage pour mettre en œuvre une identification optique d'empreintes digitales sous l'écran.

## 100

FIG. 1

## 100

FIG. 2

<u>200</u>

FIG. 3

<u>201</u>

FIG. 4

FIG. 5

200

FIG. 6

201

FIG. 7

201

FIG. 8

230

| 1 | 2 | 1 | 2 | 1 | 2 | 1 | 2 |
|---|---|---|---|---|---|---|---|
| 3 | 4 | 3 | 4 | 3 | 4 | 3 | 4 |
| 1 | 2 | 1 | 2 | 1 | 2 | 1 | 2 |
| 3 | 4 | 3 | 4 | 3 | 4 | 3 | 4 |
| 1 | 2 | 1 | 2 | 1 | 2 | 1 | 2 |
| 3 | 4 | 3 | 4 | 3 | 4 | 3 | 4 |
| 1 | 2 | 1 | 2 | 1 | 2 | 1 | 2 |
| 3 | 4 | 3 | 4 | 3 | 4 | 3 | 4 |

FIG. 9

FIG. 10

FIG. 11

FIG. 12

FIG. 13

FIG. 14

FIG. 15

FIG. 16

FIG. 17

FIG. 18

D₂/CA=0.4      D₂/CA=0.7      D₂/CA=1.3

FIG. 19

FIG. 20

FIG. 21

<u>200</u>

201

211

243

260

250

242

222

241

221

231    233

FIG. 22

FIG. 23

FIG. 24

FIG. 25

Electronic device 500

Display screen 510

Fingerprint identification
apparatus 520

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111598068 A
- CN 111801679 A

- CN 111095286 A